# EUROPEAN PATENT SPECIFICATION

(11) **EP 1 410 670 B1**
(45) Date of publication and mention of the grant of the patent: **14.09.2005**
(21) Application number: 00945706.0
(22) Date of filing: 31.05.2000
(51) Int. Cl.: H04Q 7/38, H04Q 7/32

(54) **A METHOD AND AN ARRANGEMENT FOR SELECTING A RADIO ACCESS UNIT IN A RADIO COMMUNICATION SYSTEM**
VERFAHREN UND VORRICHTUNG ZUM AUSWÄHLEN EINER FUNKZUGRIFFSEINHEIT IN EINEM FUNKKOMMUNIKATIONSSYSTEM
PROCEDE ET DISPOSITIF DE SELECTION D'UNE UNITE D'ACCES PAR RADIO DANS UN SYSTEME DE RADIO COMMUNICATIONS

(43) Date of publication of application: 21.04.2004
(73) Proprietor: TELEFONAKTIEBOLAGET LM ERICSSON (publ), 164 83 Stockholm (SE)
(72) Inventor: VAN DER POL, Edwin, NL-7511 LP Enschede (NL); HUIJGEN, Arie, NL-7321 LJ Apeldoorn (NL)
(74) Representative: Tonscheidt, Andreas
(86) International application number: PCT/EP2000/005144
(87) International publication number: WO 2001/093619

(56) References cited:
- EP-A- 0 468 569
- EP-A- 0 722 258
- US-A- 5 574 996
- US-A- 5 940 760

## Description

The present invention relates generally to wireless communications systems and, more specific, to radio communications systems for duplex radio communication with TDMA-technology (TDMA, Time Division Multiple Access), e.g. DECT-systems (DECT, Digital Enhanced Cordless Telecommunications).

The use of wireless telecommunication has exponentially increased. New wireless telecommunication applications are replacing many of the conventional wireline system applications as the demand for mobility is growing.

In wireless telecommunication systems, the used equipment is fed by a local power source, e.g. a battery. The usage time of a fully charged battery is a function of the power capacity of the battery and the power consumption of the denoted equipment. Although the development of high capacity batteries is ongoing, the capacity of a battery is limited and has to be charged regularly. Users nevertheless prefer a mobile unit with a power source, which has to be charged as less frequently as possible. This user-desire is further emphasising the demand for mobile units, which would use less power than the existing mobile units, and still would have available all the present functionality as well as functionality of new features.

Within telecommunication systems it is also relatively common to support a certain number of users e.g. N users, with a limited number of communication channels e.g. M channels, where N > M. This characteristic of supporting only a limited number of communication channels is forced by economical reasons. It is calculated that not all users are having a connection at the same time. Also in wireless telecommunication systems the air-channels within the allotted frequency bands for communication paths are quite scarce.

In wireless telecommunications it is quite common to have transmission channels created by deployment of speech sampling, which samples are compressed in time and sent in a short bursts, leaving the interjacent spaces in between for other transmission channels. Transmitting these bursts on more than one frequency can even enlarge the transmission capacity.

These bursts can be sent within equidistantial periods on several frequencies, providing the transmission channels. As an example, a DECT communication system uses Multi-carrier / Time Division Multiple Access (MC/TDMA) based transmission, where the transmission channels are provided by 10 radio carriers, each divided into 24 timeslots, serving 12 duplex communication channels.

Within a cordless communication system like DECT, the exact timeslot-position and frequency combination for a certain channel is not predetermined and can even be changed while the channel is active.

By having only a limited number of frequency/timeslot combinations available, there is always a chance that a certain frequency/timeslot combination in a certain wireless telecommunication system is in use as a transmission channel, while other frequency/timeslot combinations in the same telecommunication system are still available. This means that an active system must keep track of available channels for communication. A well-designed active system can prevent blocked calls or connections, if there are still available channels to occupy.

Without the intention of limitation, the invention will now be explained by its application in a cordless radio telephony system, operating in accordance with DECT standards.

In the following, the prior art solutions will be described in more detail with reference to the accompanying drawings 1-14, in which:
- Figure 1: is an illustrative diagram showing a cordless telecommunication system according to prior art in a business environment,
- Figure 2: is an illustrative diagram showing a cordless telecommunication system according to prior art in a residential environment,
- Figure 3: is an illustrative diagram showing a wireless network topology according to prior art in a small business environment,
- Figure 4: is an illustrative diagram showing a wireless network topology according to prior art in a large business environment,
- Figure 5: is an illustrative diagram showing a wireless network topology according to prior art in a residential environment,
- Figure 6: is an illustrative diagram showing a wireless network topology according to prior art in a wireless local loop (WLL) or radio local loop (RLL) environment,
- Figure 7: is an illustrative diagram showing the usage of time and frequency domain in a typical Digital Enhanced Cordless Telecommunications (DECT) environment according to prior art,
- Figure 8: is an illustrative diagram showing the structure of a D32 timeslot used in a DECT system according to prior art,
- Figure 9: is an illustrative diagram showing the structure of the A-field of a D32 timeslot used in a DECT system according to prior art,
- Figure 10: is an illustrative diagram showing the organisation of the timeframes into a multiframe according to prior art,
- Figure 11: is an illustrative diagram showing the control messages contained in the A-fields that are sent in a multiframe according to prior art,
- Figure 12: is an illustrative diagram showing the operating states of a remote radio communication unit according to prior art,
- Figure 13: is an illustrative diagram showing a typical environment scanning method of a remote radio communication unit in a DECT system according to prior art,
- Figure 14: is an illustrative diagram showing the storage of the environment scanning data of the remote radio communication unit in a DECT system according to prior art.

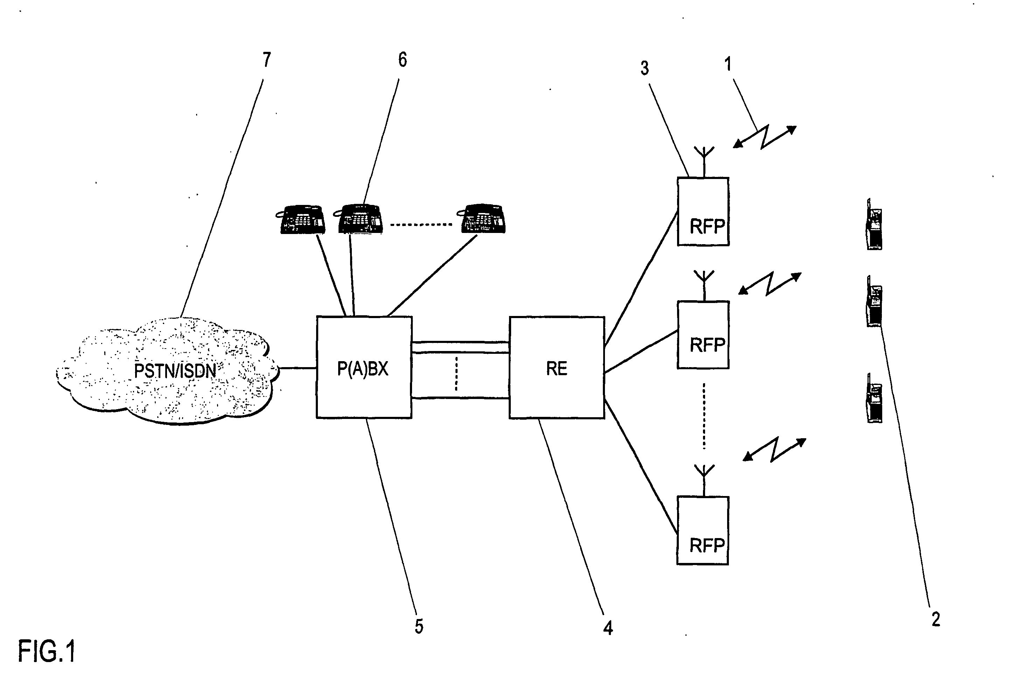

Figure 1 shows a cordless telecommunication system according to prior art in a business environment. Figure shows in a schematic and illustrative manner a typical application of a cordless telecommunication system, as applied in a business environment such as the well-known cellular and cordless telephone system. The communication system comprises a transmission system 1, which provides typically a duplex radio communication between a remote radio communication unit 2 and a plurality of radio access units 3, which are installed throughout the area to be covered. The remote radio communication unit 2 is typically a remote cordless or wireless radio communication unit in the form of portable telephone or handset. The radio access units 3 are typically compact radio access units or base stations.

In the business implementation, the radio access units 3 are wired to a Radio Exchange (RE) 4, which is in turn connected to a wired exchange 5, to which a plurality of wired phones 6 can be connected. In business environments, this exchange 5 is a typically a Private Branch Exchange (PBX) or a Private Automatic Branch Exchange (PABX). This exchange is usually connected to the public network like the Public Switched Telephone Network (PSTN) or Integrated Digital Services Network (ISDN) 7, i.e. the ordinary wired telephone network.

Business radio communication systems, such as business cordless systems, are capable of serving hundreds or even thousands of portable remote radio communication units by a plurality of radio access units 3 spread across the system area.

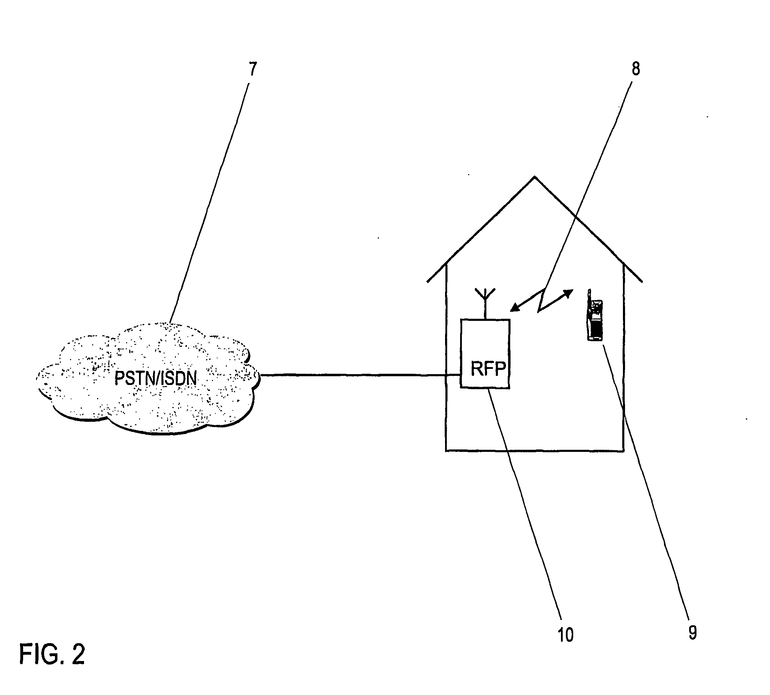

Figure 2 is an illustrative diagram showing a cordless telecommunication system according to prior art in a residential environment. Figure shows in a schematic and illustrative manner a typical application of a cordless telecommunication system, as applied in a residential environment such as the well-known cellular and cordless telephone system. The residential communication system comprises a transmission system 8, which provides typically a duplex radio communication between a remote radio communication unit 9 and a single radio access unit 10. In a residential system the radio access unit 10 is connected to the public network like the Public Switched Telephone Network (PSTN) or Integrated Digital Services Network (ISDN) 7 as to achieve global connectivity.

Each radio access unit provides a number of radio communication channels in a geographically limited area, called a cell. Typical coverage areas are picocells with a range of a few meters, nanocells with a range up to 50 meters and microcells with a range 10-400 meters. In business radio communication system environments, each radio access unit 3, 10 provides service to a given area; called a cell, which is surrounded and/or overlapped by other cells of other radio access units 3, 10.

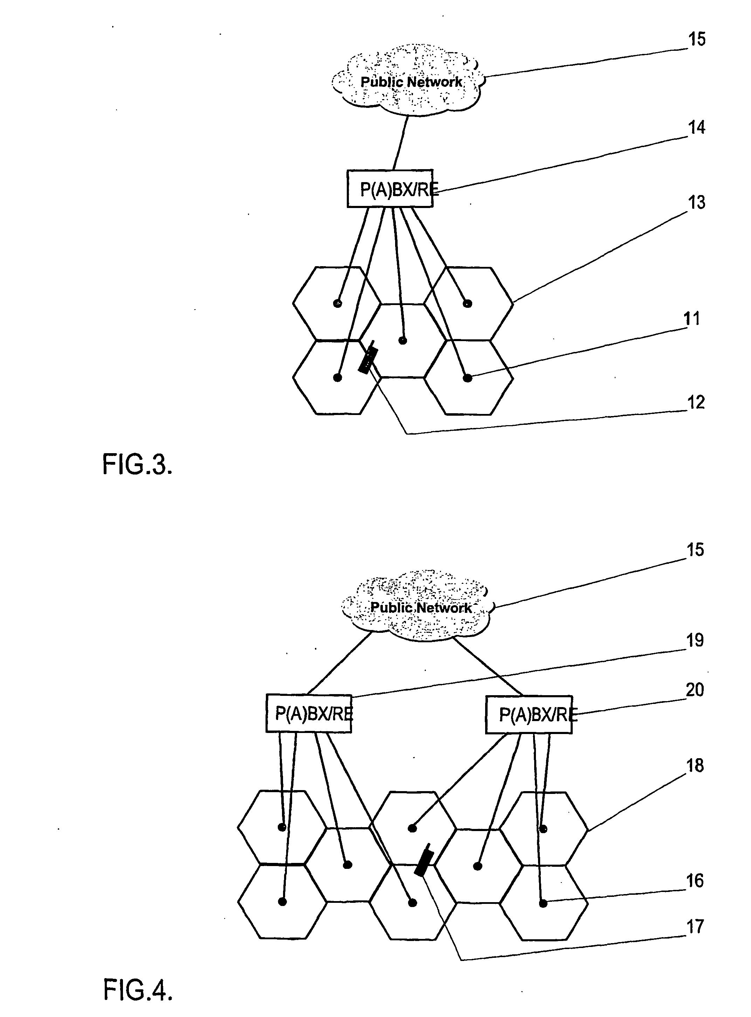

Figure 3 is an illustrative diagram showing a wireless network topology according to prior art in a small business environment. Figure shows a topology of the cell structure with its components in cellular network communication system in a small business environment. Typically, each radio access unit 11 provides a number of radio communication channels, available to users with a remote radio communication unit 12 in a cell 13. In the figure a local exchange is marked with a reference number 14 and a public network is marked with a reference number 15.

Figure 4 is an illustrative diagram showing a wireless network topology according to prior art in a large business environment. Figure shows a topology of the cell structure with its components in cellular network communication system in a large business environment. Like in small business environment, each radio access unit 16 provides a number of radio communication channels, available to users with a remote radio communication unit 17 in a cell 18. Large business environments may consist of several local exchanges, here marked with a reference numbers 19 and 20 connected to a public network is marked with a reference number 15. This topology can also be used in a CTM-network (CTM, Cordless Terminal Mobility).

While having an active connection in network topologies as in a small or large business environment, the remote radio communication unit 12, 17 can move across the coverage area or service area of the radio telecommunication system. As the remote radio communication unit 12, 17 leaves the coverage area or service area of the first radio access unit 11, 16, the call in progress is handed over from one radio access unit 11, 16, to another radio access unit 11, 16, when a certain handover threshold is reached. This process is known as "handover".

When the remote radio communication unit 12, 17 is not having an active connection, the remote radio communication unit 12, 17 will still be scanning its environment as to be ready to initiate a connection or accept an incoming call. In an environment with more than one cell, like small- or large business environments, the remote radio communication unit 17 is allowed to move around in a larger area covered by a number of cells 18 serviced by one or several local exchanges 19, 20. This process of moving around between several cells 18 without having an active connection is known as "roaming".

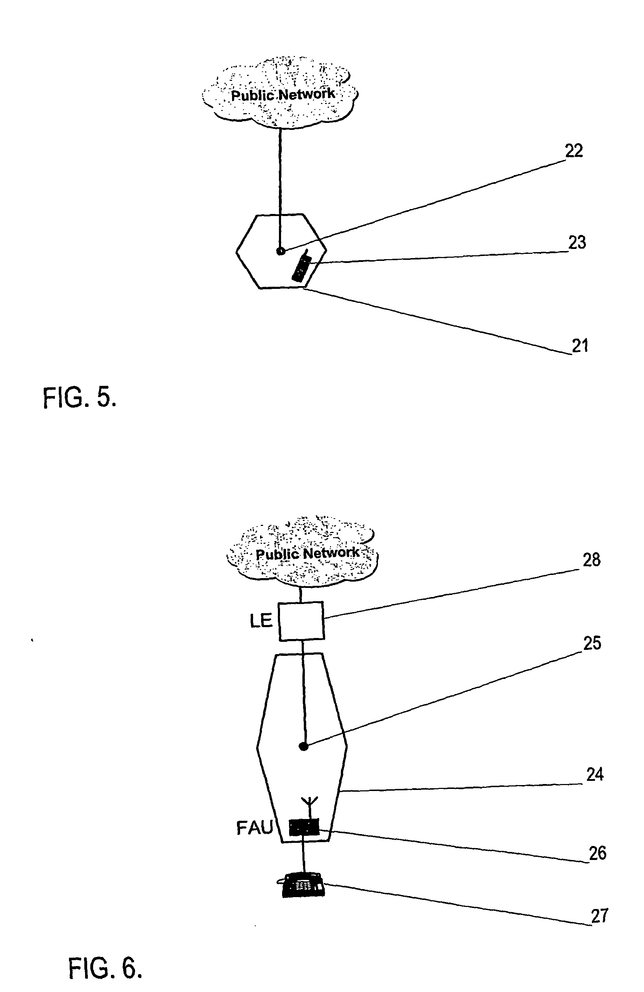

Figure 5 is an illustrative diagram showing a wireless network topology according to prior art in a residential environment. In a residential communication system there is only one cell 21 serviced by a single radio access unit 22 which provides a number of radio communication channels, available to users with a remote radio communication unit 23.

Figure 6 is an illustrative diagram showing a wireless network topology according to prior art in a wireless local loop (WLL) or radio local loop (RLL) environment. In a WLL or RLL communication system there is only one cell 24 serviced by a single radio access unit 25 which provides a number of radio communication channels, to a fixed access unit (FAU) 26. This fixed access unit 26 connects to an ordinary telephone set 27. Fixed access unit (FAU) 26 can also be a wireless fixed access unit (WFAU), which then connects to a mobile handset in the home.

The radio access unit is connected to an exchange 28, generally a Local Exchange (LE) 28, which in turn is connected to a Public Switched Telephone Network (PSTN) or Integrated Digital Services Network (ISDN).

DECT radio communication networks may comprise several DECT radio communication systems, which can be independently operated by one or more operators. Further, several DECT radio communication systems may be operated independently in the same geographical area.

In the case of synchronously operated systems, provisions are made to secure that the timeframes and timeslots of the several units involved are exchanged following a common system timing. This implies that the timing references of the several radio access units and radio communication units have to be adjusted with a predetermined accuracy to the common system timing.

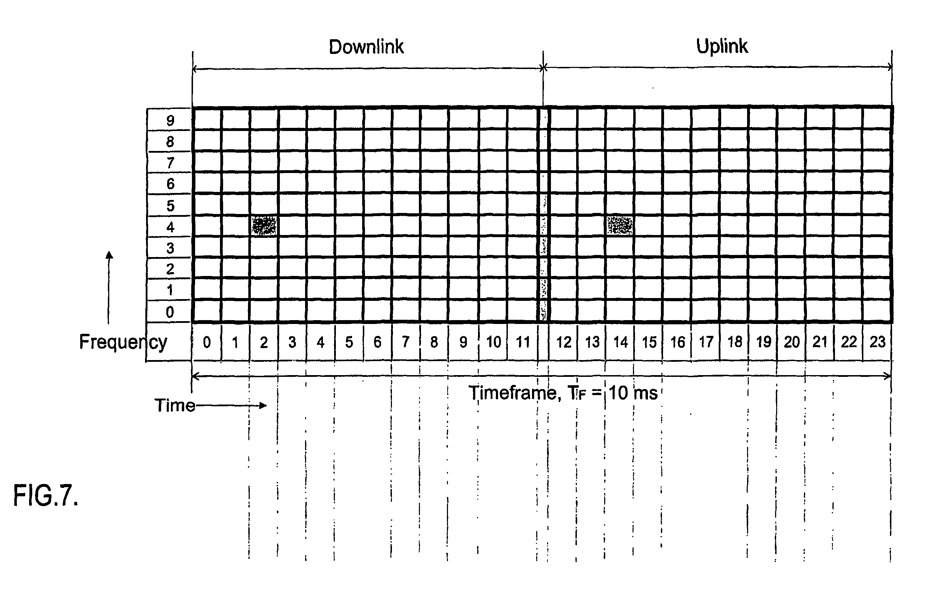

Figure 7 is an illustrative diagram showing the usage of time and frequency domain in a typical Digital Enhanced Cordless Telecommunications (DECT) environment according to prior art. DECT is a Multi-Carrier/Time Division Multiple Access/ Time Division Duplex system (MC/TDMA/TDD-system), where a certain number X timeslots are arranged in a timeframe of X/2 duplex timeslots, which in turn are applied in a system with multiple frequencies. In a DECT-system, there are typically 24 timeslots arranged in a timeframe of 12 duplex timeslots, which are applied in a system with 10 frequencies.

These timeslots enable the remote radio communication unit to reserve two (=duplex) or more timeslots simultaneously to have the information (speech samples or data for any application) transported between remote radio communication unit and radio access unit.

The frequency band applied within DECT system has the range of 1880 - 1900 MHz, with a frequency spacing of 1,782 MHz. In this figure the frequencies are referenced as 0,1,2...9, and the timeslots are referenced as 0,1,2...23. The timeslots are organised into a timeframe of 10ms, which timeframe is then repeated continuously.

Each frequency/timeslot unit can be used for transmission of data or speech. As an example there is an active channel represented by the occupied timeslots 2 and 14 on frequency 4, which are transmitted over the air link 1. During the first half of each half-timeframe (timeslots 0-11) information is sent from the radio access unit 3 to the remote radio communication unit 2, whereas at the second half-timeframe information is sent from the remote radio communication unit 2 to the radio access unit 3.

A duplex channel for speech communication thus comprises two timeslots that are always 12 timeslots separated from each other and normally reside both on the same frequency. For data communication, one or more timeslots in the first half-timeframe as well in the second half-timeframe might be allocated, depending on the implementation and application. Both the remote radio communication unit as well as the radio access unit use the same timeslot structure.

In order to provide a connection with the best achievable quality, the remote radio communication unit is continuously scanning its environment for:
- the best and probably most closest radio access unit which the remote radio communication unit is allowed to use, with the best channel quality, and for
- a frequency/timeslot combination with the best quality, i.e. with a low RSSI-indication (RSSI, Radio Signal Strength Indication), indicating that this channel is neither in use by an radio access unit nor interfered by some other radio signal emitting source.

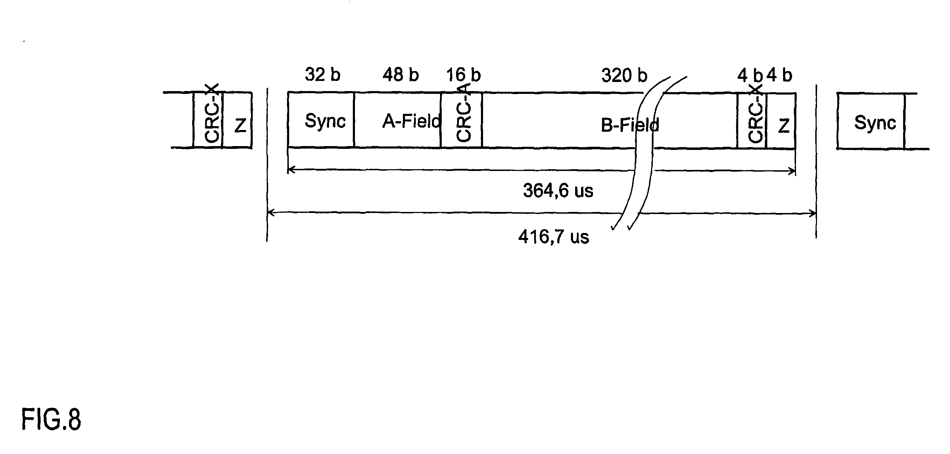

Figure 8 is an illustrative diagram showing the structure of a D32 timeslot used in a DECT system according to prior art. The different DECT timeslot types differ in B-field length, timeslot operation and modulation level. The basic and most commonly used timeslot type is D32 timeslot comprises 424 bits in total. The timeslot has 32 bits denoted to SYNC field, used for synchronisation purposes, 64 bits denoted to A-field, which holds control information, 324 bits denoted to B-field, which holds the payload information, such as speech samples or data, and 4 bits denoted to Z field, used for collision detection. The SYNC field has to be correctly identified for transmission purposes and otherwise indicates errors in the transmission path.

As the bits are transmitted at a bit rate of 1152 kb/s, these 424 bits occupy 364,6 µs which is a little less than the allowed timeslot length of 416,7 µs. This leaves some tolerance for transceiver hardware switching and stabilising as well as providing a guard-space for slight variations in synchronous operation.

The A-field may contain several types of control information, among others, system information on identity and access rights, services availability. The A-field may also contain, when required, control information for handover to another communication channel in case of disturbances or transfer of a call to another radio access unit. Also paging and call set-up procedures are carried by the A-field.

The user information, at the B-field, comprises in case of a telephone call, digitised speech samples obtained during the timeframe cycle time T_{F} of 10 ms. The speech samples are ADPCM-coded (ADPCM, Adaptive Differential Pulse Code Modulation), and have a typical bit rate of 32 kb/s. For each speech call 320 bits have to be transmitted and received during each timeframe. The ADPCM coded B-field information contains 80 speech samples of 4 bit each, occupying 320 bits per timeslot. The ADPCM data is formed from the difference of successive 8 bit wide PCM-coded (PCM, Pulse Code Modulation) speech samples.

When the B-field is providing transmission of user data instead of speech, it is up to the application to use all bits in the B-field, which offers a transparent datastream service of 32 kb/s. The B-field is scrambled and a 4 bit Cyclic Redundancy Check (CRC) word designated X-CRC is formed from the information data.

The A-field utilises a Cyclic Redundancy Check (CRC) as well, comprised by a 16 bit wide CRC, denoted as R-CRC. These checks are used to identify errors in the received information and to indicate a probability of errors in the transmission path.

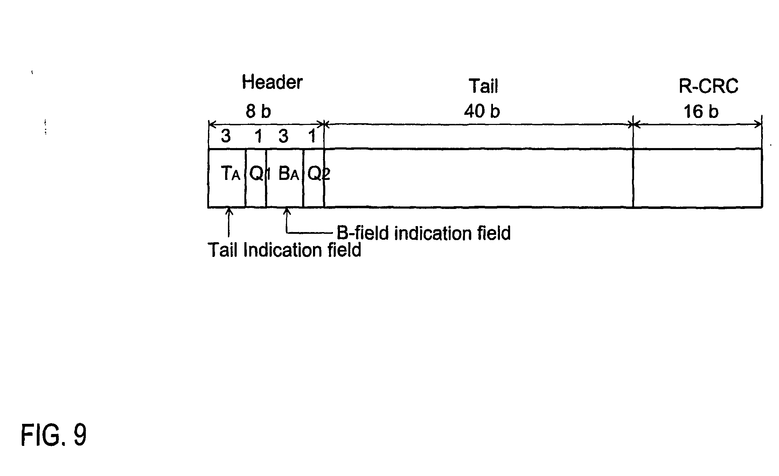

Figure 9 is an illustrative diagram showing the structure of the A-field of a D32 timeslot used in a DECT system according to prior art. The D32 timeslot A-field has 8 bits denoted as "Header", 40 bits denoted as "Tail", and 16 bits denoted as Cyclic Redundancy Check (R-CRC). The A-field Header holds information on the type of information that is contained in the A-field and the B-field. The A-field Tail consists of a number of bits which hold information for exchanging control messages between the remote radio communication unit and radio access unit.

The DECT standard uses the OSI-model (OSI, Open Systems Interconnection), several layers are recognised having a number of services being able to service the functions of a higher layer. As the higher layer has organised its functions into so-called "channels", the control messages transported by the A-field are denoted as X-channel messages, where "X" stands for the type of channel.

A DECT system uses, for example, the following channel messages:
- Nt-channel messages, which are used by remote radio communication unit and radio access unit to send each other identity information i.e. among others; the unique identifier of the radio access unit and access rights for determination of allotted access of services,
- Qt-channel messages, which are used by radio access unit to give system information, e.g. number of frequencies and number of transceivers, and to function as a multiframe marker,
- Pt-channel messages, which are used by radio access unit to signal e.g. the actual quality of the used frequency/timeslot combinations, and as well to signal the remote radio communication unit that the radio access unit is busy for new speech connections or for new data-connections.
- Mt-channel messages, which are used by radio access unit to signal e.g. handover requests as to have the remote radio communication unit to hand over its connection to a new radio access unit.

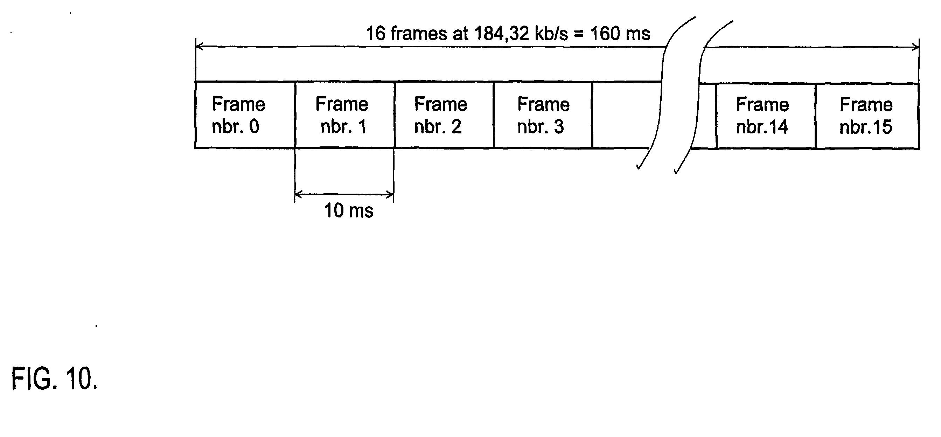

Figure 10 is an illustrative diagram showing the organisation of the timeframes into a multiframe according to prior art. Each timeframe has a reference number 0-15, depending on the position in the multiframe. As each multiframe lasts 10 ms, the multiframe envelope is repeated every 160 ms.

The user information, like speech or data, is a continuous flow of bits packed in B-fields. The control information that respectively is packed in the A-fields, is subject to a priority scheme along the supplied message types according to a predetermined DECT standard and thus depends on the actual situation. Only one message out of the collection of messages can be sent in one A-field per timeslot.

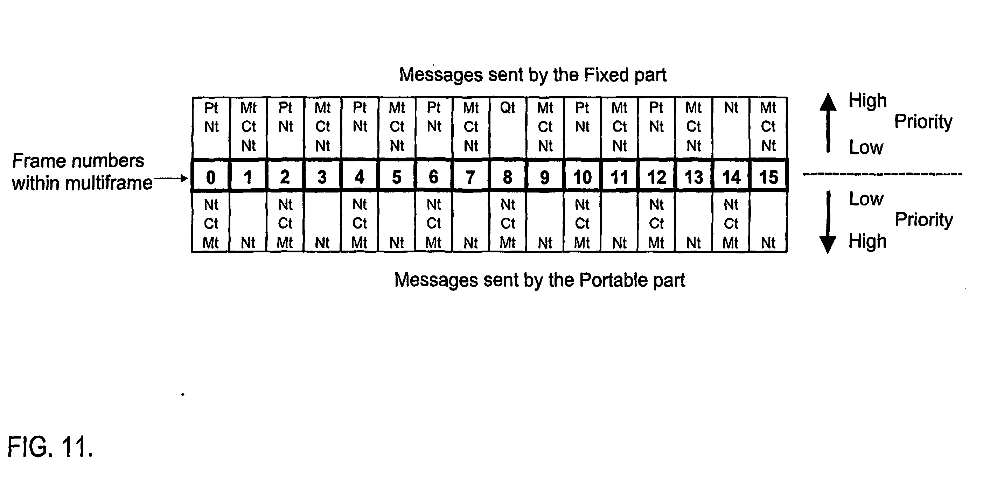

Figure 11 is an illustrative diagram showing the control messages contained in the A-fields that are sent in a multiframe according to prior art. The figure shows the control messages with their locations and priority schemes. As can be seen, the radio access unit can send Pt-, Mt-, Ct-, Nt- and Qt-channel messages whereas the remote radio communication unit can send Mt-, Nt- and Ct-channel messages.

The Pt-channel messages are sent with the highest priority by the radio access unit at the even timeframes (0, 2, 4, 6, 10 and 12). Furthermore at the timeframe number 8, always a Qt-channel message is sent and at timeframe number 14 the Nt-channel message is always sent.

The priority in sending the type of messages is determined by the sending radio access unit and is dependent on the actual situation, e.g. on the status of the remote radio communication unit, or on a special request of the remote radio communication unit.

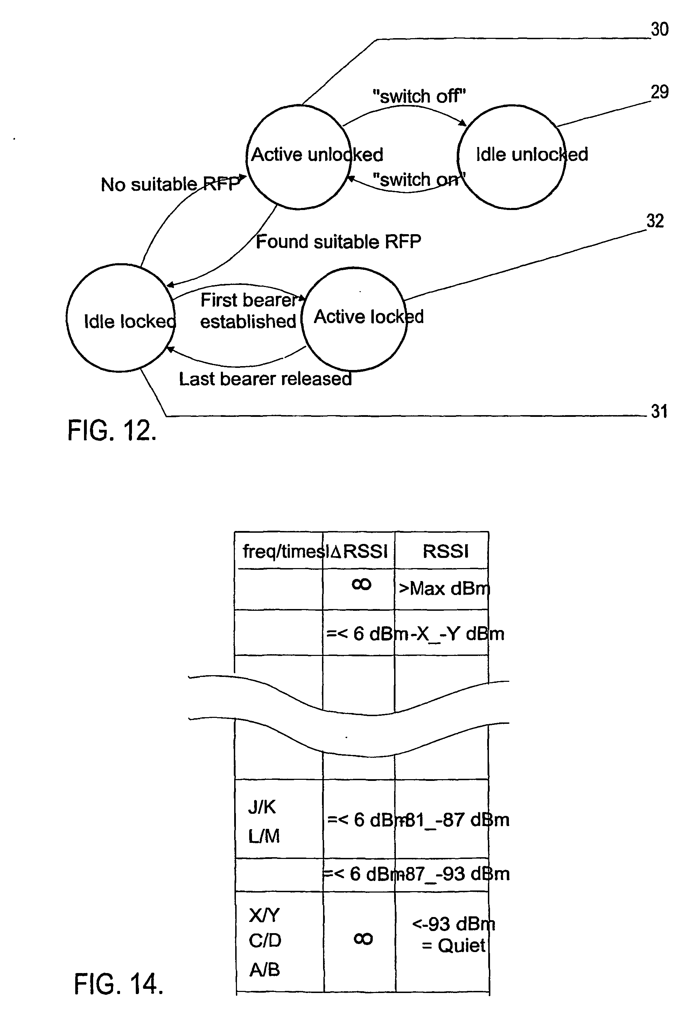

Figure 12 is an illustrative diagram showing the operating states of a remote radio communication unit according to prior art. Initially a remote radio communication unit is switched off at state "Idle unlocked" 29. As the remote radio communication unit is switched on to a state "Active unlocked" 30, the remote radio communication unit is scanning its environment for proper radio signals from a radio access unit at which the remote radio communication unit can synchronise its internal processes.

When a remote radio communication unit in the active unlocked state 30 has scanned for a certain period and found a proper radio access unit signal to synchronise on, the remote radio communication unit changes to a state "Idle locked" 31. A remote radio communication unit in the idle locked state 31 is not having an active connection but is merely listening to its locked radio access unit for control messages e.g. a paging request when an incoming call is signalled. When the user initiates a connection at the remote radio communication unit, or an incoming call is answered, the remote radio communication unit changes to a state "Active locked" 32.

The remote radio communication unit in the idle locked 31 and the active locked 32 states is continuously scanning its environment during the first halve of the timeframe. This scanning process is driven by the need to supply the transmission with the actually best available frequency/timeslot combination. The remote radio communication unit is scanning for:
- the received signals from different radio access units with their radio signal quality in order to locate the best accessible radio access unit to be locked on and
- the frequency/timeslot combinations in order to find a signal which is suitable for future radio-link establishment.

The remote radio communication unit can move around the geographically situated radio access units, and also other sources than the considered radio access unit can cause unpredictable changing radio-signal transmission conditions. There is a need to have a selection in place for alternative radio access units to lock on and alternative frequency/timeslot combinations for future connection requests.

In most DECT systems a plurality of radio access units are also geographically located in such a way that coverage of the service area is overlapping. Two overlapping radio access units can sometimes use the same frequency/timeslot combination. In this case at least one of the radio access units has to change its current transmission to another frequency/timeslot combination.

In prior art cordless systems the selection of a radio channel is usually based on the so-called Dynamic Channel Allocation (DCA) technique, in which a free radio link or communication channel amongst a plurality of radio links or communication channels, common to all radio access units of the system is selected. DCA requires no channel or frequency planning and optimises the occupation of the available communication capacity of the system.

One of the basic features of the system is the decentralised Continuous Dynamic Channel Selection (CDCS), a technique in which the remote radio communication unit selects the best available radio communication channel. With CDCS, channel selection is not limited to call set-up, but the selection continues during the communication. CDCS optimises the radio link quality between a radio access unit and a remote radio communication unit and the occupation of the available radio communication channels per cell.

Whenever the remote radio communication unit in the idle locked state 31 scans and detects, that the current channel quality of the locked radio access unit decreases below a certain threshold, a roaming to another radio access unit will be initiated by the remote radio communication unit, based on the reception of an adequate RSSI of another radio access unit. A transmission of an radio access unit with an active link for another (active) remote radio communication unit or a so called "dummy" channel of an radio access unit, which is not in use as an active channel, suffices for a remote radio communication unit to decide to lock on this new radio access unit. Besides the usage of the signal to decide on locking, the A-field of a received timeslot will hold the essential information as e.g. the message that the particular remote radio communication unit is paged for an incoming call.

When the remote radio communication unit is in the active locked state 32, the above applies but the question is about "handover" instead of "roaming". The handover/roaming can be distinguished in three types:
- an intracell handover/roaming, which applies in a transfer to another frequency/timeslot combination within the area of the same radio access unit,
- an intercell handover/roaming, which applies in a transfer to another frequency/timeslot combination of another radio access unit in the same logical network,
- an extracell (or intersystem) handover/roaming, which applies in a transfer to another frequency/timeslot combination of another radio access unit of another logical network.

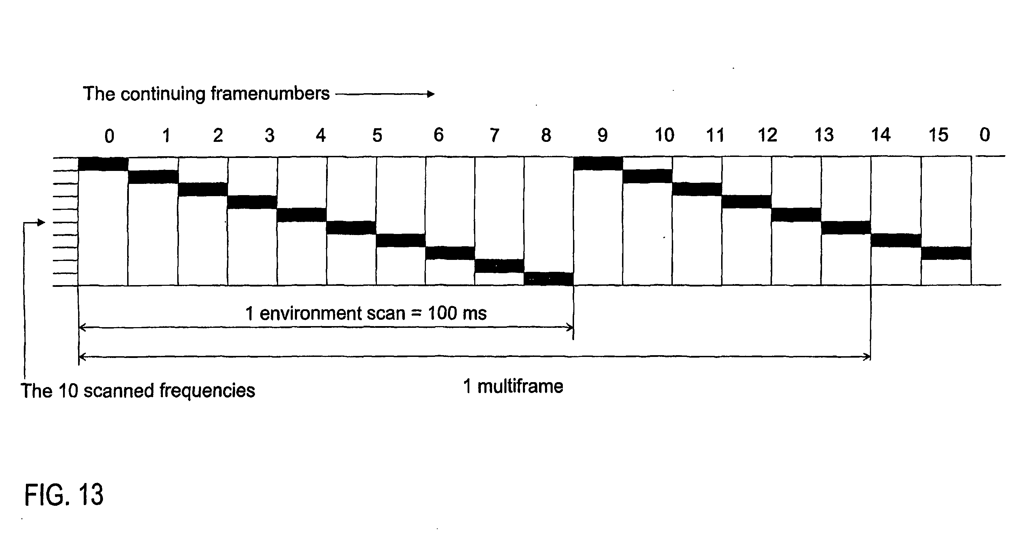

Figure 13 is an illustrative diagram showing a typical environment scanning method of a remote radio communication unit in a DECT system according to prior art. Typically the remote radio communication unit in the idle locked state 31, scans the environment by listening on only one frequency per timeframe, usually starting with the highest timeframe number and the lowest frequency. As the radio access units of a DECT system typically do have transmissions on 10 frequencies, an environment scan is completed after 10 timeframes. As each timeframe takes 10 ms, the environment scan is completed within 10 * 10 ms = 100 ms.

When the remote radio communication unit has an active connection, hence residing in the active locked state 32, the remote radio communication unit always listens to its "own" radio access unit, that is: the radio access unit to which the remote radio communication unit is currently locked on, for the active frequency/timeslot combination at any timeframe. Besides this active timeslot, the environment will be scanned as shown in the idle locked state 31, except for the position of the active timeslot and a timeslot before and after this position, also denoted as "blind slots", due to hardware restrictions. This type of environment scan is not complete. The DECT standard requires that an environment scan has to be executed at least every 30 seconds. Listening to each timeframe as to achieve a complete up-to-date environment scan can be considered as power consuming.

During a scan preferably all information with regard to the transmission quality of the several detected radio links is retrieved and listed, such as RF signal level (RSSI), burst synchronisation (SYNC) error, system information field test word (R-CRC) error, data field test word (X-CRC) error. The decision on roaming or handing over to another radio access unit can be performed by using a weighing scheme in order to estimate the need for a handing over or roaming to a particular access unit.

The decision to hand over or roam may take into account other information than link quality. This information can, for instance, be access rights, preferences of inter-cell or inter-system handover or roaming to synchronous radio links, or the occurrence of a current linked radio access unit, which signals to be busy for data traffic.

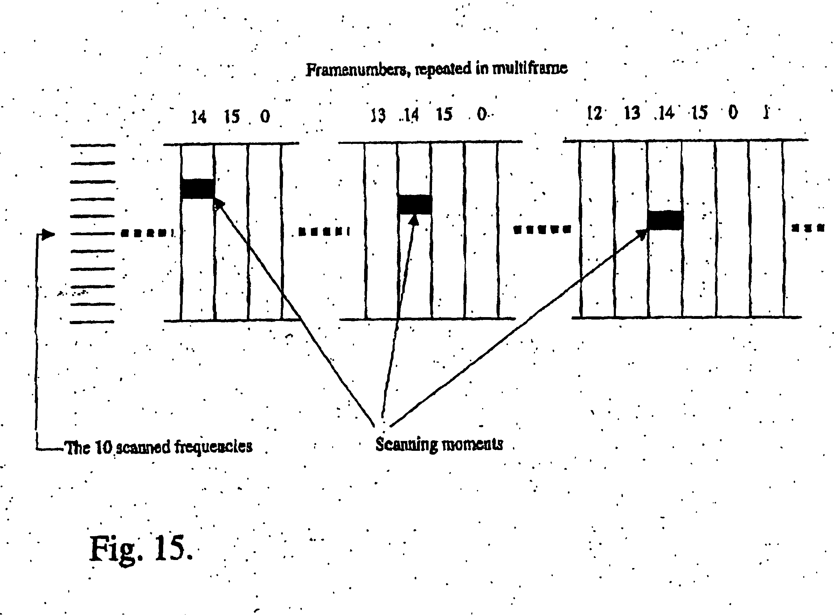

Figure 14 is an illustrative diagram showing the storage of the environment scanning data of the remote radio communication unit in a DECT system according to prior art. The figure shows the way in which the remote radio communication unit organises the scanned RSSI values of the frequency/timeslot combinations for future use as a communication channel.

According to the DECT standard, RSSI-values (RSSI, Radio Signal Strength Indication) are arranged in order of 6dB steps, starting with -93dBm as a lower limit. Frequency/timeslot combinations with a RSSI below -93dBm are considered as "quiet" channels, hence ideal to occupy when a connection is requested.

The need for an actively updated list with alternatives is required in order to prevent an adversely affected data or speech transmission, if no proper channel can be selected and occupied. In the latter case, a call in progress can be severely distorted by a number of mutes or even be dropped. Channel selection and channel occupation during handover or roaming is a process, which involves a considerable amount of signalling load, hence power consumption of the remote radio communication unit's battery.

Setting up a call for especially data-traffic, which may require more resources i.e. simultaneous timeslots than for speech traffic, can at times be subject to non-availability of enough free timeslots. In practice it might be a subject to have always a minimum number of timeslots reserved for speech traffic or have speech traffic prioritised above data-traffic or vice-versa. In case a radio access unit has no more timeslots for data and/or speech, this radio access unit can send a message that it is "busy for data and/or speech" in the Pt-channel message.

A major drawback of the solutions according to the prior art is that if an idle locked remote radio communication unit has to set-up a call, there is a faire chance that the locked radio access unit is busy for speech and/or data or the locked radio access unit has not enough timeslots for speech and/or data according to the remote radio communication unit's needs. This is because most business environments are characterised by dense communication periods where radio access units are getting frequently blocked for call set-ups. When the radio access unit is blocked, the remote radio communication unit has to start searching for another available radio access unit, which has timeslots available for respectively speech and/or data. The start-up of a searching process causes extra waiting time for the user or system needing a call connection. Especially for data calls, which have typical call duration of 2-3 seconds, the extra waiting time for call set-up of typical 1 second is a substantial drawback compared with the average total call time.

Another major drawback of prior art is that the remote radio communication unit is using battery power to have the environment continuously scanned. The power consumption of a remote radio communication unit is in general substantially determined by the receiving activities as scanning of the environment. This is because the average remote radio communication unit usage model shows relatively short active call periods intermixed with long inactive non-calling periods. The frequent scanning procedure according to prior art, reduces the battery charge lifetime, resulting in a need for frequent charging the battery and hence a probable not operational situation in view of the user.

An example of a system and method for selecting a communication channel in a radio communication system where a remote radio communication unit communicates with radio access units, is described at European Patent Application, publication number EP-A-0 722 258, Tat & Saunders.

According to the first aspect of the present invention there is provided a method for selecting a radio access unit in a radio communication system comprising radio access units and at least one radio communication unit, being arranged for setting up a connection at a radio link between a remote radio communication unit and a radio access unit, which radio link is selected from a plurality of predetermined radio links, which is characterised by that the method comprises the steps of scanning for the neighbouring radio access units in order to get information on the identities and on the signal strengths of the neighbouring radio access units, and selecting a radio access unit out of a plurality of radio access units based on the received signal quality and on the history and availability of the resources of said radio access unit. There is also provided an arrangement for selecting a radio access unit in a radio communication system comprising radio access units and at least one radio communication unit, being arranged for setting up a connection at a radio link between a remote radio communication unit and a radio access unit, which radio link is selected from a plurality of predetermined radio links, which is characterised by that the arrangement also the arrangement comprises means for scanning for the neighbouring radio access units in order to get information on the identities and on the signal strengths of the neighbouring radio access units, and means for selecting a radio access unit out of a plurality of radio access units based on the received signal quality and on the history and availability of the resources of said radio access unit.

The invention is part of the so called Dynamic Channel Allocation (DCA) process, in which the best estimation and decision is made to which radio access unit the remote radio communication unit will roam to or makes a handover to. As to deploy a method for preventing waiting times between a call set-up request and the actual accomplished communication channel set-up, calls in progress or a new call set-up would not be facing distortion or even dropping due to application time-outs.

It is as well an object of the present invention to present an improved standby and operational lifetime of the remote radio communication unit, related to the power source, nowadays mostly based on a battery. The battery capacity depends on the construction and used materials, but is nevertheless finite.

From a users perspective, the standby- and operational-lifetime of a remote radio communication unit without recharging or replacing the batteries, determines the continuously operation time of the telecommunication system.

The invention offers a method in which scanning occurs less than usual, but frequent enough to obtain the required information to decide for the optimal radio access unit to lock on or to make a handover to as well as to decide for the best frequency/timeslot combination for channel selection.

The invention relates to topologies with more than one radio access unit which is the case for small business systems, large business systems or Cordless Terminal Mobility (CTM) networks

It is an object of the present invention to present an improved method for performing roaming- and handover-functions between radio access units for especially data connections but for speech connections as well, in accordance with a predetermined radio communication standard, such as DECT

The new solution for initiating roaming and making a handover in a radio communication system comprising radio access units and at least one radio communication unit, consists of a new selection process of the radio access unit and a new scanning process of the available radio access units.

Complete understanding of the system and method of the present invention may be obtained by the preferred embodiments that follow, taken in conjunction with the accompanying drawings, wherein:
- Figure 1: is an illustrative diagram showing a cordless telecommunication system according to prior art in a business environment,
- Figure 2: is an illustrative diagram showing a cordless telecommunication system according to prior art in a residential environment,
- Figure 3: is an illustrative diagram showing a wireless network topology according to prior art in a small business environment,
- Figure 4: is an illustrative diagram showing a wireless network topology according to prior art in a large business environment,
- Figure 5: is an illustrative diagram showing a wireless network topology according to prior art in a residential environment,
- Figure 6: is an illustrative diagram showing a wireless network topology according to prior art in a wireless local loop (WLL) or radio local loop (RLL) environment,
- Figure 7: is an illustrative diagram showing the usage of time and frequency domain in a typical Digital Enhanced Cordless Telecommunications (DECT) environment according to prior art,
- Figure 8: is an illustrative diagram showing the structure of a D32 timeslot used in a DECT system according to prior art,
- Figure 9: is an illustrative diagram showing the structure of the A-field of a D32 timeslot used in a DECT system according to prior art,
- Figure 10: is an illustrative diagram showing the organisation of the timeframes into a multiframe according to prior art,
- Figure 11: is an illustrative diagram showing the control messages contained in the A-fields that are sent in a multiframe according to prior art,
- Figure 12: is an illustrative diagram showing the operating states of a remote radio communication unit according to prior art,
- Figure 13: is an illustrative diagram showing a typical environment scanning method of a remote radio communication unit in a DECT system according to prior art,
- Figure 14: is an illustrative diagram showing the storage of the environment scanning data of the remote radio communication unit in a DECT system according to prior art,
- Figure 15: is an illustrative diagram showing the environment scanning method of the remote radio communication unit according to the present invention,

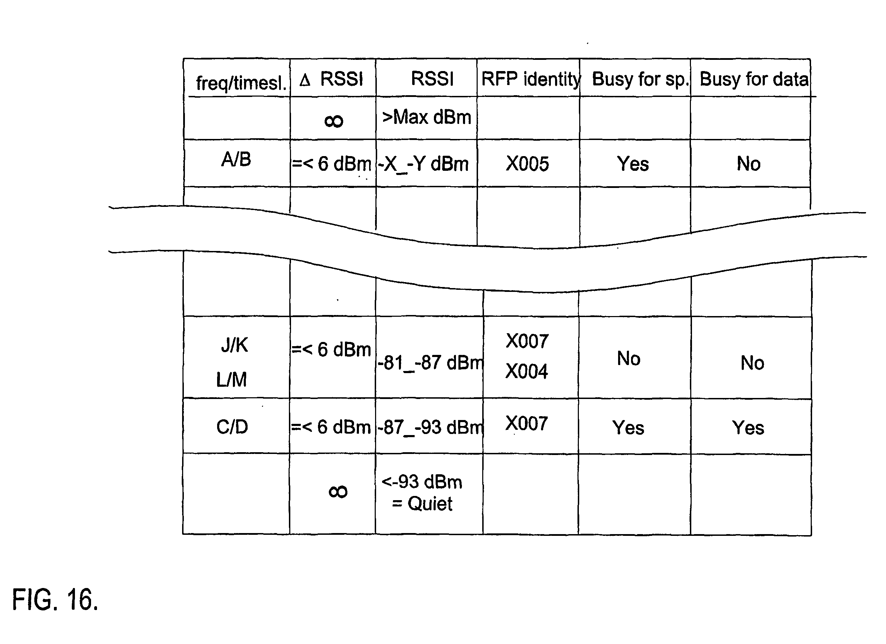

- Figure 16: is an illustrative diagram showing an example on the received info of the environment scans being stored in a DCA-database at the remote radio communication unit according to the present invention,

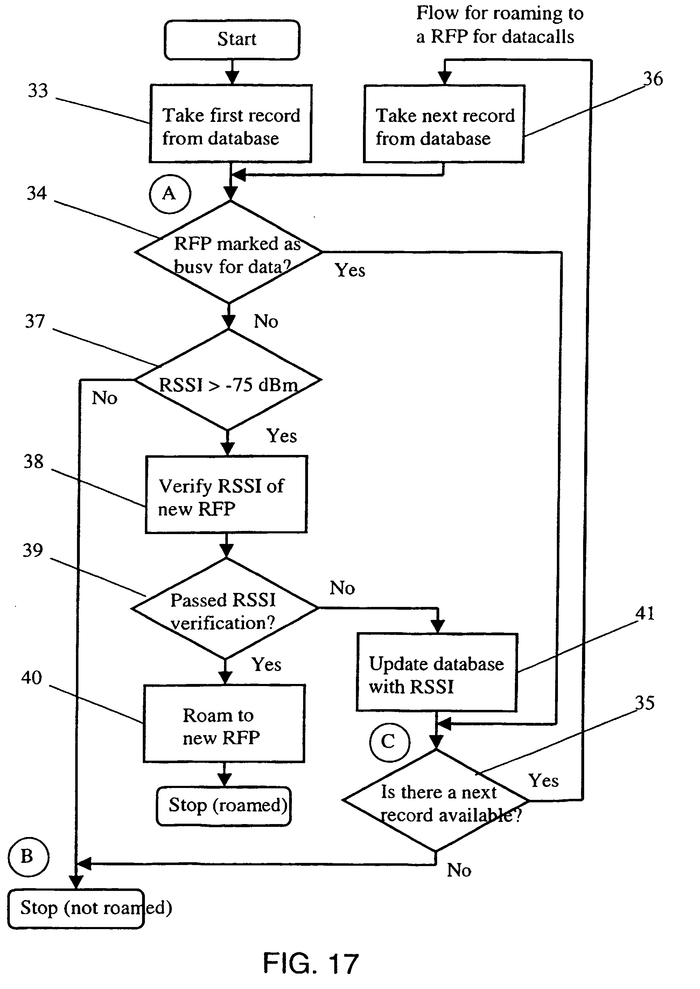

- Figure 17: is a flowchart diagram of a method for selecting a base-station in a cordless communication system according to the present invention used with data calls,

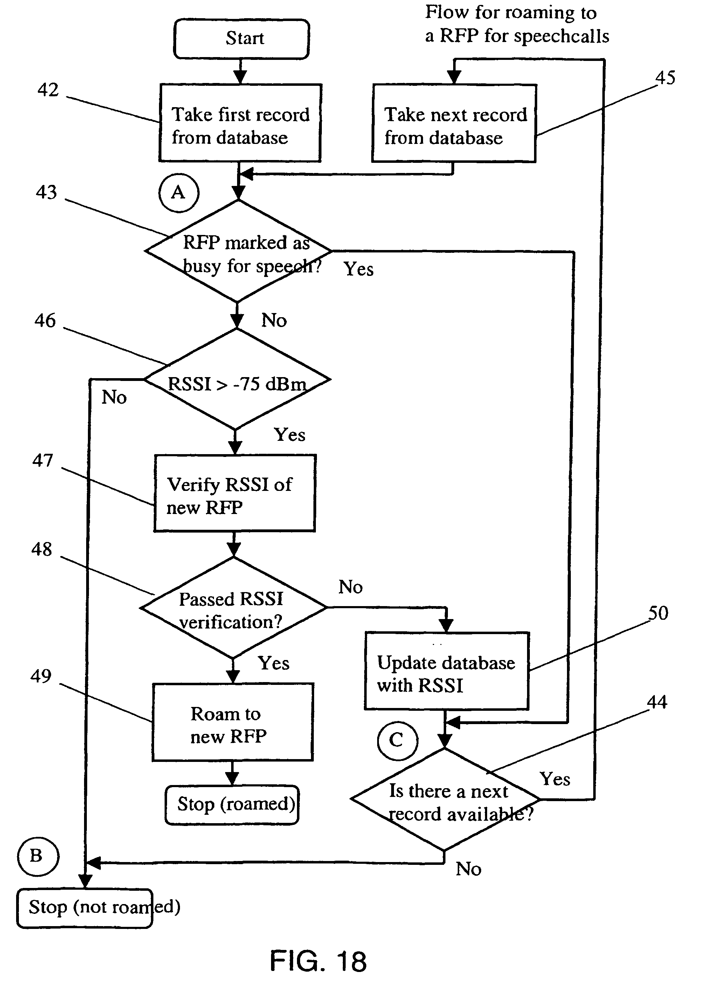

- Figure 18: is a flowchart diagram of a method for selecting a base-station in a cordless communication system according to the present invention used with speech calls,

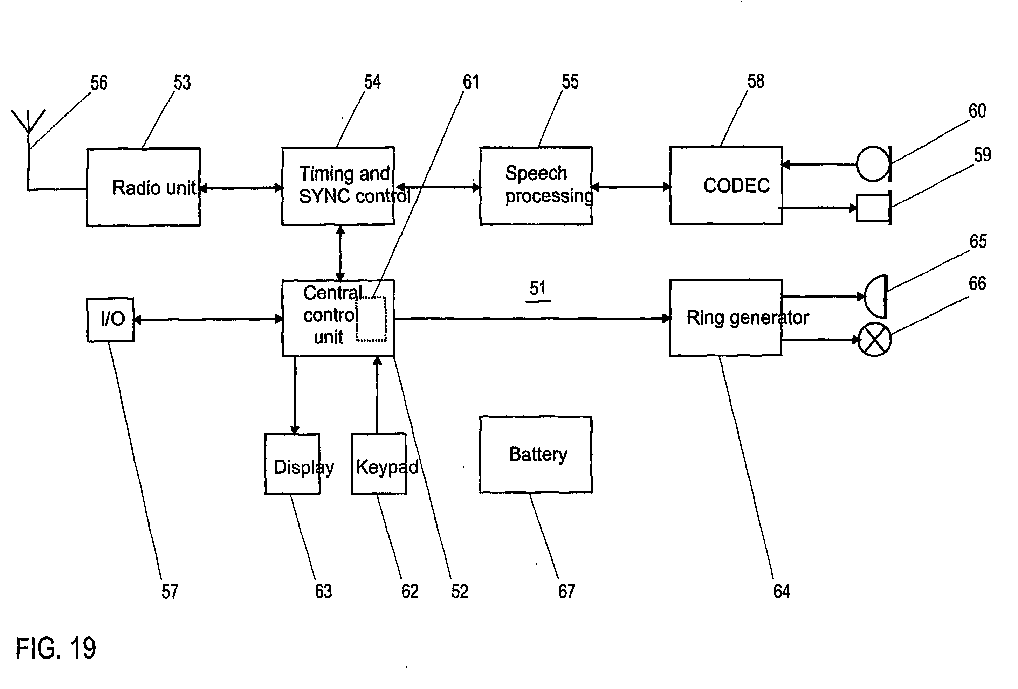

- Figure 19: is a block diagram of an arrangement for selecting a base-station in a cordless communication system according to the present invention,

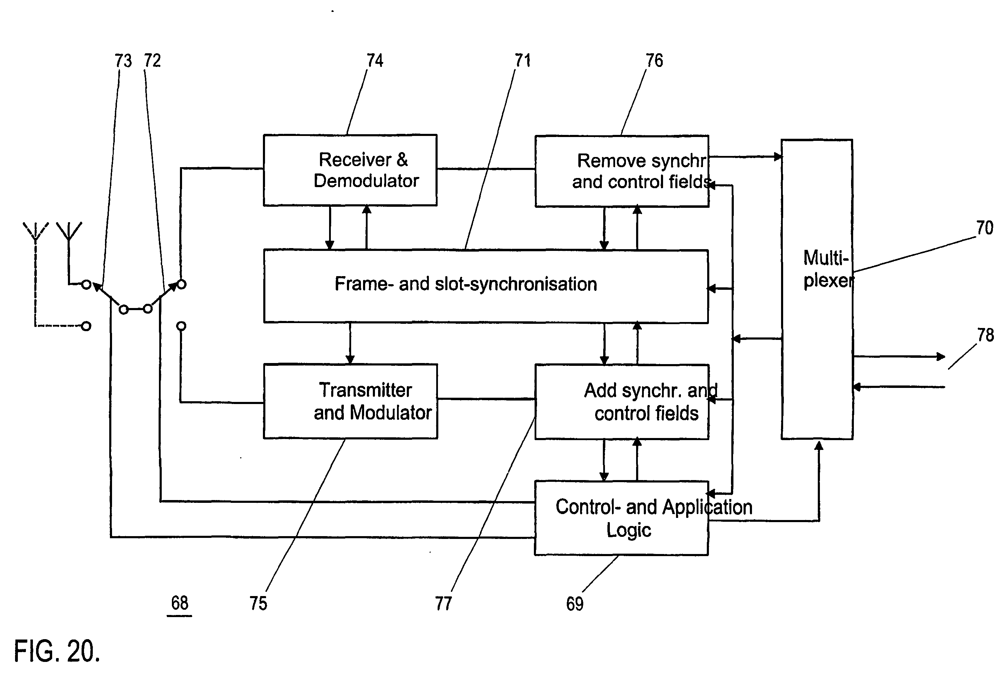

- Figure 20: is a block diagram of an alternative arrangement for selecting a base-station in a cordless communication system according to the present invention.

The prior art solutions have been described in drawings 1-14. In the following, the solution according to the present invention will be described in more detail with reference to the accompanying drawings 15-20.

Figure 15 is an illustrative diagram showing the environment scanning method of the remote radio communication unit according to the present invention. In the figure the remote radio communication unit resides in an "idle-locked" state 29. Instead of scanning continuously for the neighbouring radio access units, the remote radio communication unit scans for the neighbouring radio access units just frequently enough to get up-to-date information about signal strength (RSSI) and identities of neighbouring radio access units.

The scanning is executed at a predetermined period. The scanning of the environment allows the remote radio access unit to collect information on identities and signal strengths of the radio access units. Within each multiframe only one timeframe, the timeframe number 14, is scanned for one frequency at the time. The remote radio access unit scans continuously its locked radio access unit only for timeframe number 14 during its idle locked status 31.

The timeframe number 14 is selected for the scanning because at this timeframe the radio access unit is always sending the Nt channel message. By receiving this Nt channel message, the remote radio communication unit is able to determine the identity of one or more active radio access units and check if a connection to this radio access unit is allowed. In case a connection to this radio access unit is allowed, the scanned information of this radio access unit, i.e. the RSSI and the radio access unit identity are stored at a DCA-database within the remote radio communication unit.

While the remote radio communication unit is in a "idle-locked" state 29, the remote radio communication unit listens at each multiframe, for frame number 0, to the timeslot/frequency combination of the radio access unit to which the remote radio communication unit has been locked. At each multiframe, framenumber 14 is scanned as well. This method will prevent the so-called "blind slots" when scanning the environment. The remote radio communication unit will still be able to retrieve the full information of its "own" locked radio access unit, as the Pt-messages are received & processed.

The selecting of the radio access unit to which will be locked on or roamed to, is based on this information of the radio access units, and the selection of the best radio access unit is based on the on availability of their resources.

The invention is implemented in a radio communication system, e.g. in a Digital European Cordless Telecommunications (DECT) system. In a DECT system the predetermined radio access unit criteria is formed by, amongst others, the flags for being busy for speech and/or data.

When the remote radio communication unit receives a message that its "own" radio access unit is busy or will be busy (for speech and/or data), the remote radio communication unit marks the radio access unit as busy for speech an/or data in its DCA-database for a limited time. In this case the radio communication unit will initiate a roaming to another radio access unit as to gain a new lock to a radio access unit which is preferably not busy (for speech and/or data).

As the remote radio communication unit is geographically moving with respect to the position of the locked radio access unit or is subject to a dynamic situation of the radio-environment that adversely affects the channel quality, the remote radio communication unit will attempt to lock to another radio access unit. Further, the scanning rate may be adaptively adjusted to cope with the particular environments and/or communication characteristics.

In case of a pending call, the scanning rate might be more extensive than in the waiting or idle mode of a remote radio communication unit 2, 14, 19, i.e. more timeframes are scanned than timeframe number 14 only.

For making a list as to have a suitable number of radio links available for roaming or handover, a full scan of all the available radio links is not always necessary. The scan-rate can be limited if, for instance, a sufficient number of adequately frequency/timeslots has been found and stored in the DCA-database.

The remote radio communication unit stores and organises the collected information with respect to the radio access unit, in a database.

Figure 16 is an illustrative diagram showing an example on the received info of the environment scans being stored in a DCA-database at the remote radio communication unit according to the present invention. The figure shows an example how the results of the environment scans and the received info of the current and past locked radio access units are stored in the DCA-database at the remote radio communication unit.

The column "freq./timesl." and the column "radio access unit-identity" are filled by the scanning process that senses all the radio-signal activity in the neighbourhood and classifies this information by the RSSI e.g. in the well known 6 dB classes, starting from -93dBm.

The order in which the records are listed is prioritised by the respective RSSI classes from high to low. To avoid selecting decisions based on old information which not valid anymore, the information on current availability of the resources of the radio access units is stored for a certain time in the database. This information is kept alive only for a certain predetermined period if no refreshing takes place by receiving messages from the same (locked) radio access unit. According to the DECT standard, the information will be removed/refreshed within 30 seconds.

The DCA-database will only contain the radio access units, which are accessible for the remote radio communication unit. The remote radio communication unit DCA-database fill-up process is checking the received access rights against the access rights of the remote radio communication unit, as link set-ups, handovers or roaming to an inaccessible radio access unit will be blocked anyway and hence prevents waste of process time and battery power.

Apart from this DCA-database, the scanning process retrieves information on all timeslots at all frequencies with their respective RSSI. This information is also collected in the DCA-database, for selecting the best frequency/timeslot combination when a call set-up has to be initiated.

Figure 17 is a flowchart diagram of a method for selecting a base-station in a cordless communication system according to the present invention used with data calls. The remote radio access unit will attempt to roam or handover to another radio access unit whenever the current locked radio access unit signals to become busy for data and/or speech or become short on resources according to the needs of the remote radio communication unit.

The selection of the radio access unit is based on the history and availability out of the plurality of radio access units.

The resource availability of the radio access units, stored at the DCA database, is used by the remote radio communication unit to determine the best radio access unit to access or to roam to. The resource availability is also used by the remote radio communication unit to establish the lowest chance on future blocking of a call in progress or call set-up. The remote radio communication unit applies the stored information on the radiolink criteria and related radio access unit at the DCA database for selecting a certain radiolink of the radio access unit, which will be used.

The remote radio communication unit is preferably continuously locked to one of the radio access units which has the resources available for the specific needs of this remote radio communication unit. The specific needs of a remote radio communication unit might include e.g. a certain number of consecutive timeslots for a data transmission. For this reason it is a main issue to be or get a lock to a radio access unit, which has this type of specific needs available.

The remote radio communication unit performs a process for determining the best radio access unit to achieve a lock on, according to the information versus the criteria for a radio link from the database at the remote radio access unit, for selecting a radio access unit which has sufficient timeslots available for speech and/or data according to the needs of said remote radio communication unit.

Whenever a link set-up, handover or roaming has to be initiated, the first record is taken 33 from the DCA-database. The DCA-database is queried for the first record (radio access unit with highest RSSI). Additionally the record-pointer is set to the first record. This record is then denoted as the "current" record, and all the fields of this current record are stored locally in the process memory of the remote radio communication unit and will be available for all the steps/decisions below.

As the next step it is checked 34, whether the current processed record with the denoted radio access unit has set a busy bit for data. When the busy bit for data was set and the radio access unit has no possibilities for setting up a link for data-transmission, the remote radio communication unit concludes that a set-up attempt to this radio access unit would probably fail. As the next step it is checked 35, whether there is a next record available. It will be checked whether the record pointer is already pointing to the last record of the DCA-database, which means that the last processed current record was the last record of the list.

In case that the current record was the last record of the DCA-database, the conclusion is made that there is no suitable radio access unit to roam or handover to and hence the remote radio communication unit will stay locked to the current radio access unit. This situation, denoted by label B, is not desirable but is realistic in case of heavily used system e.g. at the system's busy hour which should happen only a for a limited period compared to the total operation period in a well designed and configured system.

As the higher level process-control of the remote radio communication unit notes the unavailability of suitable radio access units to roam or make a handover to, one of the actions will be that the scanning rate is increased and there will be actively listened to all the operational radio access units just to update the DCA-database more frequently.

After this first "active" scan for radio access units the higher level process control may decide to run this radio access unit-selection flow again for selecting a suitable radio access unit for roaming or making a handover. The advantage of no extra waiting time for a call set-up is preferred in relation to the disadvantage if some extra battery consumption for the temporary increased scanning rate.

In case there are still records available in the DCA-database, the next record is taken 36 from the DCA-database, the record-pointer is increase by one, and the record to which the record-pointer is pointing to is denoted as the "current" record. Subsequently all the fields of this current record are stored locally in the process memory of the remote radio communication unit and will be available for all the following steps and decisions.

As the next step it is further checked 34, whether the current processed record with the denoted radio access unit has set a busy bit for data. The remote radio communication unit checks the actual RF signal strength (RSSI) of a certain radio access unit when said radio access unit is favourable for locking according to the information versus criteria from the database at the remote radio communication unit.

When the busy bit for data has not been set for the radio access unit of the current record, it is checked 37, whether the current processed record has the DCA-database value of the RSSI level that is equal or more than the threshold value e.g. -75dBm. If the RSSI level is equal or more than the threshold value e.g. -75dBm, from the remote radio communication unit's perspective view, the radio access unit signal is received with sufficient signal strength. The remote radio communication unit interprets that there is a fair chance that the radio access unit of the current record is an appropriate radio access unit to roam to and is likely to supply a transmission link quality in case a call has to be set-up.

If the DCA-database value of the RSSI level is equal or more than the threshold value e.g. -75dBm, then as the next step, the remote radio communication unit will verify 38 the actual RSSI level of the radio access unit in question. On the other hand, if the DCA-database value of the RSSI level is less than the threshold value e.g. -75dBm, there will be no roaming and the remote radio communication unit keeps locked to its current radio access unit and the process flow stops B.

As the DCA-database has its records organised in a list where the record with the highest value of the RSSI is on top, denoted as the first record, and all other records according to their RSSI values in decreasing order below the first record, it is assured that if the current record has an RSSI value below the threshold value e.g. -75dBm, all subsequent records in the DCA-database also do have a RSSI value lower than the threshold value e.g. -75dBm.

By deciding not to process the, if present, subsequent records with a RSSI value, lower than the threshold value, e.g. -75dBm, processing power is saved as any call set-up attempt to an radio access unit with a RSSI lower than the threshold value e.g. -75dBm will not meet the requirements on transmission link quality. When the RSSI verification 38 of current record is completed, the actual RSSI value of the considered radio access unit is known. This actual RSSI value is then compared 39 to the required RSSI level.

When the comparison 39 of the actual RSSI value is passed, it is assured that the considered radio access unit is a good choice to have the remote radio communication unit roamed to. As the next step the remote radio communication unit is roamed 40 to the new radio access unit, found by the above-described process. Roaming to this new radio access unit, assures that this radio access unit has the correct access rights with respect to the remote radio communication unit, is not busy for speech and/or data, has a RSSI of the threshold value e.g. -75dBm or higher. For the moment it is obvious that a call set-up to this radio access unit has a more than fair chance of success.

When the comparison 39 of the actual RSSI value is not passed, this means that the actual RSSI is, despite the information in the DCA-database, lower than the threshold value e.g. -75dBm. In this case, as the next step, the RSSI value of the current radio access units record is updated 41 with the actual value. Following this the next record, if available, from the DCA-database is processed 36.

In case a remote radio communication unit is idle-locked to an radio access unit which becomes inadequate for the remote radio communication units demand, which may comprise the RSSI level of the radio access unit and the radio access unit being busy for data, the process-steps, describe above assure that the best actual available radio access unit will be chosen from a list of radio access units which operate in the environment of the remote radio communication unit. The process-steps described above will have the remote radio communication unit roam to the best available radio access unit.

The remote radio communication unit will stay locked to the radio access unit in case of no available or better alternatives according to the information versus criteria from the database at the remote radio communication unit.

Figure 18 is a flowchart diagram of a method for selecting a base-station in a cordless communication system according to the present invention used with speech calls. Whenever a link set-up, handover or roaming has to be initiated, the first record is taken 42 from the DCA-database.

As the next step it is checked 43, whether the current processed record with the denoted radio access unit has set a busy bit for speech. When the busy bit for speech was set and the radio access unit has no possibilities for setting up a link for speech transmission, the remote radio communication unit concludes that a set-up attempt to this radio access unit will fail.

As the next step it is checked 44, whether there is a next record available. In case that the current record was the last record of the DCA-database, the conclusion is made that there is no suitable radio access unit to roam or handover to and hence the remote radio communication unit will stay locked to the current radio access unit.

In case there are still records available in the DCA-database, the next record is taken 45 from the DCA-database, and it is further checked 43, whether the current processed record with the denoted radio access unit has set a busy bit for speech. When the busy bit for speech has not been set for the radio access unit of the current record, it is checked 46, whether the current processed record has the DCA-database value of the RSSI level that is equal or more than the threshold value.

If the DCA-database value of the RSSI level is equal or more than the threshold value, then as the next step, the remote radio communication unit will verify 47 the actual RSSI level of the radio access unit in question. On the other hand, if the DCA-database value of the RSSI level is less than the threshold value, there will be no roaming and the.remote radio communication unit keeps locked to its current radio access unit and the process flow stops B.

When the RSSI verification 47 of current record is completed, the actual RSSI value of the considered radio access unit is known. This actual RSSI value is then compared 48 to the required RSSI level. When the comparison 48 of the actual RSSI value is passed, it is assured that the considered radio access unit is good choice to have the remote radio communication unit roamed to. As the next step the remote radio communication unit is roamed 49 to the new radio access unit, found by the above-described process.

When the comparison 48 of the actual RSSI value is not passed, this means that the actual RSSI is lower than the threshold value. In this case, as the next step, the RSSI value of the current radio access units record is updated 50 with the actual value. Following this the next record, if available, from the DCA-database is processed 45.

In case a the remote radio communication unit is idle-locked to a remote radio communication unit which becomes inadequate for the remote radio communication units demand, which may comprise the RSSI level of the radio access unit and the radio access unit being busy for speech, the process-steps, describe above assure that the best actual available radio access unit will be chosen from a list of radio access units which operate in the environment of the remote radio communication unit. The process-steps described above will have the remote radio communication unit roam to the best available radio access unit.

Figure 19 is a block diagram of the remote communication unit as part of an arrangement for selecting a base-station in a cordless communication system according to the present invention. This block diagram comprises an arrangement for selecting a radio access unit in a DECT cordless communication system, comprising a remote radio communication unit, radio access units and at least one remote radio communication unit, wherein said remote radio communication unit comprises control means.

The remote radio communication unit set 51 has four essential building blocks, i.e. a central control and application-processing unit 52, a radio unit 53, a timing and synchronisation unit 54 and a speech-processing unit 55.

The radio unit 53 comprises an air interface 56 having an antenna system coupled to a transceiver unit comprising a transmitter/modulator and a receiver/demodulator. The timing and synchronisation unit 54 receives the data over the air interface 56 and the radio unit 53 from an radio access unit 3, which data is processed in accordance with the system clock timing provided by the radio exchange 4.

Signalling and synchronisation information is removed from the received data by the unit 54 and received control data from the A-field is sent to the logic unit for processing. Besides the received user data from the B-field is sent to the speech-processing unit 55 in case of speech data or to the data-interface 57, in case of data.

The speech-processing unit 55, among others, takes care of the deciphering of received data. A codec 58 decodes the digitised speech data into analogue form for making it audible to a user by means of a speaker 59 connected to the codec 58.

Speech produced by the user is received by a microphone 60 and encoded into a suitable digital format by the codec 58. This encoded speech data is fed to the speech-processing unit 55 which, among others, takes care of encryption of the speech data. The timing and synchronisation control unit 54 adds appropriate synchronisation and signalling information to the combination of control data and encrypted user speech or data information. The radio unit 53 transmits this information via the air-interface 56 for reception by radio access unit 3 of the communication system to which the telephone set 51 is operatively connected.

The central control and application-processing unit 52 comprises a microprocessor or microcontroller and memory means 61, and connects to the timing and synchronisation unit 54. The central control unit 52 essentially controls the operation of the remote radio communication unit on all levels from the abstract level as the remote radio communication unit states until the control of almost all devices present in the telephone set 51, and all levels in between.

The communication with the user is controlled by the central control unit 52 via the keypad means 62, display means 63 and ring generator means 64, all connected to the central control unit 52. Timeframe and timeslot scanning and allocation, and in the case of a multi-carrier multi-timeslot technology such as DECT, also the various combinations of frequency and timeslots, are controlled by the central processing unit 52.

In accordance with the present invention, the scanned information, such as a/o. radio access unit identity, RSSI level and the busy bits for data and speech, are processed by the central control unit 52 and stored in the memory means 61 comprising an ordered DCA-database.

The ring generator 64 connects to a buzzer 65 for producing a ringing or alerting sound at the arrival of a call or other occasions, controlled by the central processing unit 52. Optionally a visual alerting signal may be emitted by a lamp or a light emitting diode (LED) 66, connected as shown. The display means 63, such as a LCD device, are operatively connected to the central control unit 52 for displaying call information and other user and system information. For the overall powering of the telephone set 51 a battery or other power source and a powering unit 67 is included.

Figure 20 is a block diagram of the radio access unit as part of an arrangement for selecting a base-station in a cordless communication This blockdiagram comprises an arrangement for selecting a radio access unit in a DECT cordless communication system, comprising of a radio access unit and at least one remote communication unit, wherein said radio access unit comprises control means.

The figure shows a radio access unit 68, which operates in accordance with the DECT standard. The radio access unit has a wired connection to a radio exchange 4. Central call control and application processing unit 69 detects incoming calls and controls outgoing calls and selects suitable combinations of frequency and timeslots in accordance with the DCA/DCS algorithm. A multiplexer 70 merges the different connections and their respective timeslots. The multiplexer 70 is connected to the interface 78 of the radio exchange (RE) where the signal of the speech and data is exchanged.

The radio access unit 68 has a timeframe and timeslot synchronisation unit 71, which controls timeslot reception and transmission timing. The central control and application-processing unit 69 also controls a transmit/receive (T/R) switch 72 and an antenna diversity switch 73, if antenna diversity is implemented. The radio interface of the radio access unit 68 consists of a receiver/demodulator 74 and a transmitter/modulator 75.

Synchronisation and control information is stripped from received information by unit 76, whereas synchronisation and control information is added to the information to be transmitted by unit 77. Both units 76 and 77 are connected as shown to a central synchronisation-controlling module 71.

Although the present invention is generally illustrated with respect to a DECT cordless telephone communication system, it is not restricted to thereto. The present invention can be used with other communication devices, such as data communication equipment, as well as in other wireless multicell communication systems.

## Claims

1. A method for selecting a radio access unit (3,11,16) by a remote radio communication unit (2,12,17) in a radio communication system comprising radio access units (3,11,16) and at least one remote radio communication unit (2,12,17), being arranged for setting up a connection at a radio link between a remote radio communication unit (2,12,17) and a radio access unit (3,11,16), which radio link is selected from a plurality of predetermined radio links and where the radio access units (3,11,16) advertise their identity and status on busy for speech and busy for data, **characterised in that** the method comprises the steps of:
- scanning the radio access unit (3,11,16) which is currently selected by the remote radio communication unit (2,12,17), for information on signal strength, advertised identity and advertised status on busy for data and busy for speech and storing this information, and
- scanning neighbouring radio access units (3,11,16) in order to get information on the identities and on the signal strengths of the neighbouring radio access units (3,11,16) and storing this information, and
- selecting a radio access unit (3,11,16) out of a plurality of radio access units (3,11,16) based on the stored signal strengths, identities and if stored, the status of busy for speech and busy for data of said radio access units (3,11,16), when the currently selected radio access unit (3,11,16) signals that it has no radio links available.

2. A method according to claim 1, **characterised in that** the scanning is executed at a predetermined period.

3. A method according to claim 2, **characterised in that** the scanning is executed at only one timeframe within each multiframe, which timeframe is scanned for one frequency at the time.

4. A method according to claim 3, **characterised in that** the scanning is executed at within the DECT-timeframe number 14, which is scanned for one frequency at the time.

5. A method according to any of the claims 1-4, **characterised in that** in case of a pending call, the scanning is executed at more than one timeframe within each multiframe.

6. A method according to any of the claims 1-5, **characterised in that** the remote radio communication unit (2,12,17) stores and organises the information on signal strength and advertised status on busy for speech and data with respect to the radio access unit (3,11,16) which is currently selected, in a database.

7. A method according to claim 6, **characterised in that** the information on availability of a radio link to the radio access units (3,11,16) is stored for a predetermined saving period in the database.

8. A method according to any of the claims 1-7, **characterised in that** the selecting of the radio access unit (3,11,16) is based on signal strength and flags for being busy for speech and/or data of radio access units (3,11,16) which have been selected by the remote radio communication unit (2,12,17) during a predetermined saving period.

9. A method according to any of the claims 1-8, **characterised in that** the method comprises the steps of
- retrieving, storing and organising (33), (42) to a database the information on the RSSI and availability on channels for data transmission of radio access units (3,11,16),
- checking (34), (43) the current record on the database for timeslots available for data transmission,
- checking (37), (46) the current record on the database for the RSSI-value,
- retrieving (38), (47) the RSSI-value of the radio access unit (3,11,16), to which the current record is relating,
- verifying (39), (48) the RSSI-value of the radio access unit (3,11,16), and when the RSSI-value of the radio access unit (3,11,16) is equal or higher than the RSSI value according to current record of the database,
- selecting (40), (49) the radio access unit (3,11,16), to which the current record of the database is relating.

10. A method according to claim 9, **characterised in that** after verifying (39), (48) the RSSI-value of the radio access unit (3,11,16), when the RSSI-value of the radio access unit (3,11,16) is lower than the RSSI value according to current record of the database, the method comprises the steps of
- updating (41), (50) the current record of the database with the new RSSI value,
- checking (35), (44), retrieving (36), (45) and storing the next available record from the database, after which the next steps are
- checking (34), (43) the current record on the database for timeslots available for data transmission,
- checking (37), (46) the current record on the database for the RSSI-value,
- retrieving (38), (47) the RSSI-value of the radio access unit (3,11,16), to which the current record is relating,
- verifying (39), (48) the RSSI-value of the radio access unit (3,11,16), and when the RSSI-value of the radio access unit(3,11,16) is equal or higher than the RSSI value according to current record of the database,
- selecting (40), (49) the radio access unit (3,11,16), to which the current record of the database is relating.

11. A method according to claim 10, **characterised in that** after checking (35), (44) the database for the next available record, when there is no record available the remote radio communication unit (2,12,17) is staying locked to the current radio access unit (3,11,16).

12. A method according to claim 9, **characterised in that** after checking (37), (46) the current record on the database for the RSSI-value, when the RSSI-value of the radio access unit (3,11,16) is lower than a preset value, the remote radio communication unit (2,12,17) is staying locked to the current radio access unit (3,11,16).

13. A method according to claim 9, **characterised in that** after verifying (39), (48) the RSSI-value of the radio access unit (3,11,16), when the RSSI-value of the radio access unit (3,11,16) is lower than the RSSI value according to current record of the database, verifying (34), (43) that the current record on the database has no timeslots available for data transmission, the method comprises the steps of
- checking (35), (44), retrieving (36), (45) and storing the next available record from the database, after which the next steps are
- checking (34), (43) the current record on the database for timeslots available for data transmission,
- checking (37), (46) the current record on the database for the RSSI-value,
- retrieving (38), (47) the RSSI-value of the radio access unit (3,11,16), to which the current record is relating,
- verifying (39), (48) the RSSI-value of the radio access unit (3,11,16), and when the RSSI-value of the radio access unit (3,11,16) is equal or higher than the RSSI value according to current record of the database,
- selecting (40), (49) the radio access unit (3,11,16), to which the current record of the database is relating.

14. An arrangement for selecting a radio access unit (3,11,16) by a remote radio communication unit (2,12,17) in a radio communication system comprising radio access units (3,11,16) and at least one remote radio communication unit (2,12,17), being arranged for setting up a connection at a radio link between a remote radio communication unit (2,12,17) and a radio access unit (3,11,16), which radio link is selected from a plurality of predetermined radio links and where the radio access units (3,11,16) advertise their identity and status on busy for speech and busy for data, **characterised in that** the arrangement comprises
- means for scanning the radio access unit(3,11,16) which is currently selected by the remote radio communication unit (2,12,17), for information on signal strength, advertised identity and advertised status on busy for data and busy for speech and storing this information, and
- means for scanning for the neighbouring radio access units (3,11,16) in order to get information on the identities and on the signal strengths of the neighbouring radio access units (3,11,16) and storing this information, and
- means for selecting a radio access unit (3,11,16) out of a plurality of radio access units (3,11,16) based on the stored signal strengths, identities and if stored, the status of busy for speech and busy for data of said radio access units (3,11,16), when the currently selected radio access unit (3,11,16) signals that it has no radio links available.

15. An arrangement according to claim 14, **characterised in that** the scanning means is set up for the scanning to be executed at a predetermined period.

16. An arrangement according to claim 15, **characterised in that** the scanning means is set up for the scanning to be executed at only one timeframe within each multiframe, which timeframe is scanned for one frequency at the time.

17. An arrangement according to claim 16, **characterised in that** the scanning means is set up for the scanning to be executed at within the DECT-timeframe number 14, which is scanned for one frequency at the time.

18. An arrangement according to any of the claims 14-17, **characterised in that** the scanning means is set up so that in case of a pending call, the scanning is executed at more than one timeframe within each multiframe.

19. An arrangement according to any of the claims 14-18, **characterised in that** the remote radio communication unit (2,12,17) is set up to store and organise the information on signal strength and advertised status on busy for speech and data with respect to the radio access unit (3,11,16) which is currently selected, in a database.

20. An arrangement according to claim 19, **characterised in that** the information on availability of a radio link to the radio access units (3,11,16) is stored for a predetermined saving period in the database.

21. An arrangement according to any of the claims 14-20, **characterised in that** the selecting means is set up for the selecting of the radio access unit (3,11,16) is based on signal strength and flags for being busy for speech and/or data of radio access units (3,11,16) which have been selected by the remote radio communication unit (2,12,17) during a predetermined saving period.

22. An arrangement according to any of the claims 14-21, **characterised in that** the remote radio communication unit (2,12,17) comprises:
- a central control unit (52), comprising a memory (61) and connected to; a timing and SYNC control unit (54); an I/O unit (57); a display (63); a keypad (62) and a ring generator (64),
- a timing and SYNC control unit (54), connected to a radio unit (53) and a speech processing unit (55),
- the radio unit (53) connected to an antenna (56),
- the speech processing unit (55) connected to a codec (58)
- the codec (58) connected to a microphone (60) and speaker (59),
- the ring generator (64) connected to a buzzer (65) and LED (66), and
- a power source (67).

23. An arrangement according to any of the claims 14-22, **characterised in that** the radio access unit (3,11,16) comprises:
- a frame- and slot-synchronisation unit (71), connected to a transmitter and modulator unit (75); a unit for adding synchronisation and control fields (77), a multiplexer (70); a unit for removing synchronisation and control fields (76), a receiver and demodulator unit (74),
- a Control- and application unit (69) connected to the unit for adding synchronisation and control fields (77); to the multiplexer (70), and controlling switches (72) and (73),
- a transmit/receive switch (72) connected to the receiver and demodulator unit (74); the transmitter and modulator unit (75) and the antenna-diversity switch (73),
- an antenna diversity-switch (73) connected to the antennas, and
- a multiplexer (70), connected to the interface of the Radio Exchange (RE).

## Patentansprüche

1. Verfahren zum Auswählen einer Funkanschlußeinheit (3, 11, 16) durch eine entfernte Funk-Kommunikationseinheit (2, 12, 17) in einem FunkKommunikationssystem mit Funkanschlußeinheiten (3, 11, 16) und mindestens einer entfernten Funk-Kommunikationseinheit (2, 12, 17) zum Aufbauen einer Verbindung auf einer Funkstrecke zwischen einer entfernten Funk-Kommunikationseinheit (2, 12, 17) und einer Funkanschlußeinheit (3, 11, 16), wobei die Funkstrecke aus einer Mehrzahl vorbestimmter Funkstrecken ausgewählt wird und wobei die Funkanschlußeinheiten (3, 11, 16) ihre Identität und deren Zustand bei Besetzt für Sprache und Besetzt für Daten anzeigen, **dadurch gekennzeichnet, daß** das Verfahren folgende Schritte umfaßt:
- Abfragen der Funkanschlußeinheit (3, 11, 16), die gegenwärtig durch die entfernte Funk-Kommunikationseinheit (2, 12, 17) ausgewählt ist, nach Informationen über Signalstärke, angezeigte Identität und angezeigten Zustand bei Besetzt für Daten und Besetzt für Sprache und Speichern dieser Informationen, und
- Abfragen benachbarter Funkanschlußeinheiten (3, 11, 16) zum Erhalten von Informationen über die Identitäten und über die Signalstärken der benachbarten Funkanschlußeinheiten (3, 11, 16) und Speichern dieser Informationen, und
- Auswählen einer Funkanschlußeinheit (3, 11, 16) aus einer Mehrzahl von Funkanschlußeinheiten (3, 11, 16) auf Grundlage der gespeicherten Signalstärken, Identitäten und, sofern gespeichert, des Zustandes von Besetzt für Sprache und Besetzt für Daten der Funkanschlußeinheiten (3, 11, 16), wenn die gegenwärtig ausgewählte Funkanschlußeinheit (3, 11, 16) signalisiert, daß sie keine Funkstrecken zur Verfügung hat.

2. Verfahren nach Anspruch 1, **dadurch gekennzeichnet, daß** das Abfragen zu einer vorbestimmten Zeitperiode ausgeführt wird.

3. Verfahren nach Anspruch 2, **dadurch gekennzeichnet, daß** das Abfragen in nur einem Zeitrahmen in jedem Mehrfachrahmen ausgeführt wird, wobei der Zeitrahmen auf eine Frequenz zur Zeit abgefragt wird.

4. Verfahren nach Anspruch 3, **dadurch gekennzeichnet, daß** das Abfragen im DECT-Zeitrahmen Nummer 14 ausgeführt wird, der auf eine Frequenz zur Zeit abgefragt wird.

5. Verfahren nach Anspruch 1-4, **dadurch gekennzeichnet, daß** im Fall eines anstehenden Gesprächs die Abfrage in mehr als einem Zeitrahmen in jedem Mehrfachrahmen ausgeführt wird.

6. Verfahren nach Anspruch 1-5, **dadurch gekennzeichnet, daß** die entfernte Funk-Kommunikationseinheit (2, 12, 17) die Informationen über Signalstärke und angezeigten Zustand bei Besetzt für Sprache und Daten bezüglich der gegenwärtig ausgewählten Funkanschlußeinheit (3, 11, 16) in einer Datenbank speichert und organisiert.

7. Verfahren nach Anspruch 6, **dadurch gekennzeichnet, daß** die Informationen über Verfügbarkeit einer Funkstrecke für die Funkanschlußeinheiten (3, 11, 16) eine vorbestimmte Sicherungszeit lang in der Datenbank gespeichert werden.

8. Verfahren nach Anspruch 1-7, **dadurch gekennzeichnet, daß** das Auswählen der Funkanschlußeinheit (3, 11, 16) auf Signalstärke und Markierungen für Besetztzustand für Sprache und/oder Daten der Funkanschlußeinheit (3, 11, 16) beruht, die durch die entfernte Funk-Kommunikationseinheit (2, 12, 17) während einer vorbestimmten Sicherungszeit ausgewählt worden sind.

9. Verfahren nach einem der Ansprüche 1-8, **gekennzeichnet durch** folgende Schritte:
- Abrufen, Speichern und Organisieren (33), (42) der Informationen über die RSSI und Verfügbarkeit auf Kanälen zur Datenübertragung von Funkanschlußeinheiten (3, 11, 16) in einer Datenbank,
- Prüfen (34), (43) des gegenwärtigen Datensatzes in der Datenbank auf für Datenübertragung verfügbare Zeitschlitze,
- Prüfen (37), (46) des gegenwärtigen Datensatzes in der Datenbank auf den RSSI-Wert,
- Abrufen (38), (47) des RSSI-Wertes der Funkanschlußeinheit (3, 11, 16), auf den sich der gegenwärtige Datensatz bezieht,
- Überprüfen (39), (48) des RSSI-Wertes der Funkanschlußeinheit (3, 11, 16), und
wenn der RSSI-Wert der Funkanschlußeinheit (3, 11, 16) höher als oder gleich dem RSSI-Wert nach dem gegenwärtigen Datensatz zur Datenbank ist,
- Auswählen (40), (49) der Funkanschlußeinheit (3, 11, 16), auf die sich der gegenwärtige Datensatz der Datenbank bezieht.

10. Verfahren nach Anspruch 9, **dadurch gekennzeichnet, daß** nach Überprüfen (39), (48) des RSSI-Wertes der Funkanschlußeinheit (3, 11, 16), wenn der RSSI-Wert der Funkanschlußeinheit (3, 11, 16) niedriger als der RSSI-Wert nach dem gegenwärtigen Datensatz der Datenbank ist, das Verfahren folgende Schritte umfaßt:
- Aktualisieren (41), (50) des gegenwärtigen Datensatzes der Datenbank mit dem neuen RSSI-Wert,
- Prüfen (35), (44), Abrufen (36), (45) und Speichern des nächsten verfügbaren Datensatzes von der Datenbank, wonach die nächsten Schritte folgende sind:
- Prüfen (34), (43) des gegenwärtigen Datensatzes in der Datenbank auf zur Datenübertragung verfügbare Zeitschlitze,
- Prüfen (37), (46) des gegenwärtigen Datensatzes in der Datenbank auf den RSSI-Wert,
- Abrufen (38), (47) des RSSI-Wertes der Funkanschlußeinheit (3, 11, 16), auf die sich der gegenwärtige Datensatz bezieht,
- Überprüfen (39), (48) des RSSI-Wertes der Funkanschlußeinheit (3, 11, 16), und wenn der RSSI-Wert der Funkanschlußeinheit (3, 11, 16) höher als oder gleich dem RSSI-Wert nach dem gegenwärtigen Datensatz zur Datenbank ist,
- Auswählen (40), (49) der Funkanschlußeinheit (3, 11, 16), auf die sich der gegenwärtige Datensatz der Datenbank bezieht.

11. Verfahren nach Anspruch 10, **dadurch gekennzeichnet, daß** nach Überprüfen (35), (44) der Datenbank auf den nächsten verfügbaren Datensatz, wenn kein Datensatz verfügbar ist, die entfernte Funk-Kommunikationseinheit (2, 12, 17) auf die gegenwärtige Funkanschlußeinheit (3, 11, 16) eingerastet bleibt.

12. Verfahren nach Anspruch 9, **dadurch gekennzeichnet, daß** nach Prüfen (37), (46) des gegenwärtigen Datensatzes in der Datenbank auf den RSSI-Wert, wenn der RSSI-Wert der Funkanschlußeinheit (3, 11, 16) niedriger als ein voreingestellter Wert ist, die entfernte Funk-Kommunikationseinheit (2, 12, 17) auf die gegenwärtige Funkanschlußeinheit (3, 11, 16) eingerastet bleibt.

13. Verfahren nach Anspruch 9, **dadurch gekennzeichnet, daß** nach Überprüfen (39), (48) des RSSI-Wertes der Funkanschlußeinheit (3, 11, 16), wenn der RSSI-Wert der Funkanschlußeinheit (3, 11, 16) niedriger als der RSSI-Wert nach dem gegenwärtigen Datensatz der Datenbank ist, Überprüfen (34), (43), daß der gegenwärtige Datensatz in der Datenbank keine Zeitschlitze für Datenübertragung verfügbar hat, mit folgenden Schritten:
- Prüfen (35), (44), Abrufen (36), (45) und Speichern des nächsten verfügbaren Datensatzes aus der Datenbank, wonach die nächsten Schritte folgende sind:
- Prüfen (34), (43) des gegenwärtigen Datensatzes in der Datenbank auf zur Datenübertragung verfügbare Zeitschlitze,
- Prüfen (37), (46) des gegenwärtigen Datensatzes in der Datenbank auf den RSSI-Wert,
- Abrufen (38), (47) des RSSI-Wertes der Funkanschlußeinheit (3, 11, 16) auf die sich der gegenwärtige Datensatz bezieht,
- Überprüfen (39), (48) des RSSI-Wertes der Funkanschlußeinheit (3, 11, 16), und wenn der RSSI-Wert der Funkanschlußeinheit (3, 11, 16) höher als oder gleich dem RSSI-Wert nach dem gegenwärtigen Datensatz zur Datenbank ist,
- Auswählen (40), (49) der Funkanschlußeinheit (3, 11, 16), auf die sich der gegenwärtige Datensatz der Datenbank bezieht.

14. Anordnung zum Auswählen einer Funkanschlußeinheit (3, 11, 16) durch eine entfernte Funk-Kommunikationseinheit (2, 12, 17) in einem FunkKommunikationssystem mit Funkanschlußeinheiten (3, 11, 16) und mindestens einer entfernten Funk-Kommunikationseinheit (2, 12, 17) zum Aufbauen einer Verbindung auf einer Funkstrecke zwischen einer entfernten Funk-Kommunikationseinheit (2, 12, 17) und einer Funkanschlußeinheit (3, 11, 16), wobei die Funkstrecke aus einer Mehrzahl vorbestimmter Funkstrecken ausgewählt wird und wobei die Funkanschlußeinheiten (3, 11, 16) ihre Identität und ihren Zustand bei Besetzt für Sprache und Besetzt für Daten anzeigen, **dadurch gekennzeichnet, daß** die Anordnung folgendes umfaßt:
- Mittel zum Abfragen der gegenwärtig ausgewählten Funkanschlußeinheit (3, 11, 16) durch die entfernte Funk-Kommunikationseinheit (2, 12, 17), auf Informationen über Signalstärke, angezeigte Identität und angezeigten Zustand bei Besetzt für Daten und Besetzt für Sprache und Speichern dieser Informationen, und
- Mittel zum Abfragen der benachbarten Funkanschlußeinheiten (3, 11, 16), um Informationen über die Identitäten und über die Signalstärken der benachbarten Funkanschlußeinheiten (3, 11, 16) zu erhalten und diese Informationen zu speichern, und
- Mittel zum Auswählen einer Funkanschlußeinheit (3, 11, 16) aus einer Mehrzahl von Funkanschlußeinheiten (3, 11, 16) auf Grundlage der gespeicherten Signalstärken, Identitäten und, sofern er gespeichert ist, des Zustandes von Besetzt für Sprache und Besetzt für Daten der Funkanschlußeinheiten (3, 11, 16), wenn die gegenwärtig ausgewählte Funkanschlußeinheit (3, 11, 16) signalisiert, daß sie keine Funkstrecken verfügbar hat.

15. Anordnung nach Anspruch 14, **dadurch gekennzeichnet, daß** das Abfragemittel zur Ausführung des Abfragens zu einer vorbestimmten Zeitperiode eingerichtet ist.

16. Anordnung nach Anspruch 15, **dadurch gekennzeichnet, daß** das Abfragemittel zur Ausführung der Abfrage in nur einem Zeitrahmen in jedem Mehrfachrahmen eingerichtet ist, wobei dieser Zeitrahmen auf eine Frequenz zur Zeit abgefragt wird.

17. Anordnung nach Anspruch 16, **dadurch gekennzeichnet, daß** das Abfragemittel zur Ausführung des Abfragens innerhalb des DECT-Zeitrahmens Nummer 14 eingerichtet ist, der auf eine Frequenz zur Zeit abgefragt wird.

18. Anordnung nach einem der Ansprüche 14-17, **dadurch gekennzeichnet, daß** das Abfragemittel so eingerichtet ist, daß die Abfrage im Fall eines anstehenden Gesprächs in mehr als einem Zeitrahmen in jedem Mehrfachrahmen ausgeführt wird.

19. Anordnung nach einem der Ansprüche 14-18, **dadurch gekennzeichnet, daß** die entfernte Funk-Kommunikationseinheit (2, 12, 17) zum Speichern und Organisieren der Informationen über Signalstärke und angezeigten Zustand bei Besetzt für Sprache und Daten bezüglich der gegenwärtig ausgewählten Funkanschlußeinheit (3, 11, 16) in einer Datenbank eingerichtet ist.

20. Anordnung nach Anspruch 19, **dadurch gekennzeichnet, daß** die Informationen über Verfügbarkeit einer Funkstrecke für die Funkanschlußeinheiten (3, 11, 16) eine vorbestimmte Sicherungszeit lang in der Datenbank gespeichert werden.

21. Anordnung nach einem der Ansprüche 14-20, **dadurch gekennzeichnet, daß** die Mittel zum Auswählen der Funkanschlußeinheit (3, 11, 16) auf Grundlage der Signalstärke und Markierungen für den Zustand des Besetztseins für Sprache und/oder Daten der Funkanschlußeinheiten (3, 11, 16) eingerichtet ist, die durch die entfernte Funk-Kommunikationseinheit (2, 12, 17) während einer vorbestimmten Sicherungsperiode ausgewählt worden sind.

22. Anordnung nach einem der Ansprüche 14-21, **dadurch gekennzeichnet, daß** die entfernte Funk-Kommunikationseinheit (2, 12, 17) folgendes umfaßt:
- eine zentrale Steuereinheit (52) mit einem Speicher (61) und verbunden mit folgendem: einer Takt- und SYNC-Steuereinheit (54), einer E/A-Einheit (57), einer Anzeige (63), einer Tastatur (62) und einem Ruftongenerator (64),
- einer mit einer Funkeinheit (53) und einer Sprachverarbeitungseinheit (55) verbundenen Takt- und SYNC-Steuereinheit (54),
- wobei die Funkeinheit (53) mit einer Antenne (56) verbunden ist,
- die Sprachverarbeitungseinheit (55) mit einem Codec (58) verbunden ist,
- der Codec (58) mit einem Mikrofon (60) und Lautsprecher (59) verbunden ist,
- der Ruftongenerator (64) mit einem Summer (65) und einer LED (66) verbunden ist, und
- einer Stromquelle (67).

23. Anordnung nach einem der Ansprüche 14-22, **dadurch gekennzeichnet, daß** die Funkanschlußeinheit (3, 11, 16) folgendes umfaßt:
- eine Rahmen- und Schlitzsynchronisationseinheit (71) verbunden mit einer Sender- und Modulatoreinheit (75); einer Einheit zum Addieren von Synchronisations- und Steuerfeldern (77), einem Multiplexer (70), einer Einheit zum Entfernen von Synchronisations- und Steuerfeldern (76), einer Empfänger- und Demodulatoreinheit (74),
- eine Steuerungs- und Anwendungseinheit (69), verbunden mit der Einheit zum Addieren von Synchronisations- und Steuerfeldern (77); mit dem Multiplexer (70) und Steuerschaltern (72) und (73),
- einen Sende-/Empfangsschalter (72), verbunden mit der Empfänger- und Demodulatoreinheit (74), der Sender- und Modulatoreinheit (75) und dem Antennen-Diversity-Schalter (73),
- einen mit den Antennen verbundenen Antennen-Diversity-Schalter (73), und
- einen mit der Schnittstelle des Funkfernamts (RE
- Radio Exchange) verbundenen Multiplexer (70).

## Revendications

1. Procédé de sélection d'une unité d'accès radio (3, 11, 16) par une unité de radiocommunications distante (2, 12, 17) dans un système de radiocommunications comprenant des unités d'accès radio (3, 11, 16) et au moins une unité de radiocommunications distante (2, 12, 17), conçu pour établir une connexion au niveau d'une liaison radio entre une unité de radiocommunications distante (2, 12, 17) et une unité d'accès radio (3, 11, 16), laquelle liaison radio est sélectionnée parmi une pluralité de liaisons radio prédéterminées et où les unités d'accès radio (3, 11, 16) annoncent leur identité et leur état d'occupation pour la transmission de parole et pour la transmission de données, **caractérisé en ce qu'**il comprend les étapes de :
- balayage de l'unité d'accès radio (3, 11, 16) actuellement sélectionnée par l'unité de radiocommunications distante (2, 12, 17) pour obtenir des informations concernant l'intensité du signal, l'identité annoncée et l'état annoncé d'occupation pour la transmission de données et pour la transmission de parole, et mémorisation de ces informations, et
- balayage d'unités d'accès radio voisines (3, 11, 16) afin d'obtenir des informations concernant les identités et les intensités des signaux des unités d'accès radio voisines (3, 11, 16) et mémorisation de ces informations, et
- sélection d'une unité d'accès radio (3, 11, 16) parmi une pluralité d'unités d'accès radio (3, 11, 16) en fonction des intensités des signaux mémorisées, des identités mémorisées et, s'il est mémorisé, de l'état d'occupation pour la transmission de parole et pour la transmission de données desdites unités d'accès radio (3, 11, 16), lorsque l'unité d'accès radio (3, 11, 16) actuellement sélectionnée indique qu'elle ne dispose d'aucune liaison radio.

2. Procédé selon la revendication 1, **caractérisé en ce que** le balayage s'effectue au niveau d'une période prédéterminée.

3. Procédé selon la revendication 2, **caractérisé en ce que** le balayage s'effectue au niveau de la seule trame temporelle dans chaque multitrame, laquelle est balayée une fréquence à la fois.

4. Procédé selon la revendication 3, **caractérisé en ce que** le balayage s'effectue au niveau de la trame temporelle DECT numéro 14, laquelle est balayée une fréquence à la fois.

5. Procédé selon l'une quelconque des revendications 1 à 4, **caractérisé en ce que**, dans le cas d'un appel en attente, le balayage s'effectue au niveau de plus d'une trame temporelle dans chaque multitrame.

6. Procédé selon l'une quelconque des revendications 1 à 5, **caractérisé en ce que** l'unité de radiocommunications distante (2, 12, 17) mémorise et organise, dans une base de données, les informations concernant l'intensité du signal et l'état annoncé d'occupation pour la transmission de parole et pour la transmission de données par rapport à l'unité d'accès radio (3, 11, 16) qui est actuellement sélectionnée.

7. Procédé selon la revendication 6, **caractérisé en ce que** les informations concernant la disponibilité d'une liaison radio avec les unités d'accès radio (3, 11, 16) sont mémorisées dans la base de données pendant une période de sauvegarde prédéterminée.

8. Procédé selon l'une quelconque des revendications 1 à 7, **caractérisé en ce que** la sélection de l'unité d'accès radio (3, 11, 16) est fonction de l'intensité du signal et d'indicateurs d'occupation pour la transmission de parole et/ou pour la transmission de données d'unités d'accès radio (3, 11, 16) qui ont été sélectionnées par l'unité de radiocommunications distante (2, 12, 17) durant une période de sauvegarde prédéterminée.

9. Procédé selon l'une quelconque des revendications 1 à 8, **caractérisé en ce qu'**il comprend les étapes de :
- récupération, mémorisation et organisation (33), (42) sur une base de données des informations concernant la RSSI et la disponibilité sur des canaux pour la transmission de données d'unités d'accès radio (3, 11, 16),
- contrôle (34), (43) de l'enregistrement en cours sur la base de données pour identifier des créneaux temporels disponibles pour la transmission de données,
- contrôle (37), (46) de l'enregistrement en cours sur la base de données pour identifier la valeur de la RSSI,
- récupération (38), (47) de la valeur de la RSSI de l'unité d'accès radio (3, 11, 16) à laquelle l'enregistrement en cours est associé,
- vérification (39), (48) de la valeur de la RSSI de l'unité d'accès radio (3, 11, 16), et lorsque la valeur de la RSSI de l'unité d'accès radio (3, 11, 16) est supérieure ou égale à la valeur de la RSSI conformément à l'enregistrement en cours de la base de données,
- sélection (40), (49) de l'unité d'accès radio (3, 11, 16) à laquelle l'enregistrement en cours de la base de données est associé.

10. Procédé selon la revendication 9, **caractérisé en ce que,** suite à la vérification (39), (48) de la valeur de la RSSI de l'unité d'accès radio (3, 11, 16), lorsque la valeur de la RSSI de l'unité d'accès radio (3, 11, 16) est inférieure à la valeur de la RSSI conformément à l'enregistrement en cours de la base de données, le procédé comprend les étapes de :
- mise à jour (41), (50) de l'enregistrement en cours de la base de données à l'aide de la nouvelle valeur de la RSSI,
- contrôle (35), (44), récupération (36), (45) et mémorisation du prochain enregistrement disponible dans la base de données, à la suite de quoi viennent les étapes de :
- contrôle (34), (43) de l'enregistrement en cours sur la base de données pour identifier des créneaux temporels disponibles pour la transmission de données,
- contrôle (37), (46) de l'enregistrement en cours sur la base de données pour identifier la valeur de la RSSI,
- récupération (38), (47) de la valeur de la RSSI de l'unité d'accès radio (3, 11, 16) à laquelle l'enregistrement en cours est associé,
- vérification (39), (48) de la valeur de la RSSI de l'unité d'accès radio (3, 11, 16), et lorsque la valeur de la RSSI de l'unité d'accès radio (3, 11, 16) est supérieure ou égale à la valeur de la RSSI conformément à l'enregistrement en cours de la base de données,
- sélection (40), (49) de l'unité d'accès radio (3, 11, 16) à laquelle l'enregistrement en cours de la base de données est associé.

11. Procédé selon la revendication 10, **caractérisé en ce que**, suite à la vérification (35), (44) de la de la base de données pour identifier le prochain enregistrement disponible, lorsqu'aucun enregistrement n'est disponible, l'unité de radiocommunications distante (2, 12, 17) reste verrouillée sur l'unité d'accès radio en cours (3, 11, 16).

12. Procédé selon la revendication 9, **caractérisé en ce que**, suite à la vérification (37), (46) de l'enregistrement en cours sur la base de données pour identifier la valeur de la RSSI, lorsque la valeur de la RSSI de l'unité d'accès radio (3, 11, 16) est inférieure à une valeur préétablie, l'unité de radiocommunications distante (2, 12, 17) reste verrouillée sur l'unité d'accès radio en cours (3, 11, 16).

13. Procédé selon la revendication 9, **caractérisé en ce que**, suite à la vérification (39), (48) de la valeur de la RSSI de l'unité d'accès radio (3, 11, 16), lorsque la valeur de la RSSI de l'unité d'accès radio (3, 11, 16) est inférieure à la valeur de la RSSI conformément à l'enregistrement en cours de la base de données, il est vérifié (34, 43) que l'enregistrement en cours sur la base de données ne dispose pas de créneaux temporels pour la transmission de données, le procédé comprenant les étapes de :
- contrôle (35), (44), récupération (36), (45) et mémorisation du prochain enregistrement disponible dans la base de données, à la suite de quoi viennent les étapes de :
- contrôle (34), (43) de l'enregistrement en cours sur la base de données pour identifier des créneaux temporels disponibles pour la transmission de données,
- contrôle (37), (46) de l'enregistrement en cours sur la base de données pour identifier la valeur de la RSSI,
- récupération (38), (47) de la valeur de la RSSI de l'unité d'accès radio (3, 11, 16) à laquelle l'enregistrement en cours est associé,
- vérification (39), (48) de la valeur de la RSSI de l'unité d'accès radio (3, 11, 16), et lorsque la valeur de la RSSI de l'unité d'accès radio (3, 11, 16) est supérieure ou égale à la valeur de la RSSI conformément à l'enregistrement en cours de la base de données,
- sélection (40), (49) de l'unité d'accès radio (3, 11, 16) à laquelle l'enregistrement en cours de la base de données est associé.

14. Dispositif de sélection d'une unité d'accès radio (3, 11, 16) par une unité de radiocommunications distante (2, 12, 17) dans un système de radiocommunications comprenant des unités d'accès radio (3, 11, 16) et au moins une unité de radiocommunications distante (2, 12, 17), conçu pour établir une connexion au niveau d'une liaison radio entre une unité de radiocommunications distante (2, 12, 17) et une unité d'accès radio (3, 11, 16), laquelle liaison radio est sélectionnée parmi une pluralité de liaisons radio prédéterminées et où les unités d'accès radio (3, 11, 16) annoncent leur identité et leur état d'occupation pour la transmission de parole et pour la transmission de données, **caractérisé en ce qu'**il comprend :
- un moyen de balayage de l'unité d'accès radio (3, 11, 16) actuellement sélectionnée par l'unité de radiocommunications distante (2, 12, 17) pour obtenir des informations concernant l'intensité du signal, l'identité annoncée et l'état annoncé d'occupation pour la transmission de données et pour la transmission de parole, et de mémorisation de ces informations, et
- un moyen de balayage des unités d'accès radio voisines (3, 11, 16) afin d'obtenir des informations concernant les identités et les intensités des signaux des unités d'accès radio voisines (3, 11, 16) et de mémorisation de ces informations, et
- un moyen de sélection d'une unité d'accès radio (3, 11, 16) parmi une pluralité d'unités d'accès radio (3, 11, 16) en fonction des intensités des signaux mémorisées, des identités mémorisées et, s'il est mémorisé, de l'état d'occupation pour la transmission de parole et pour la transmission de données desdites unités d'accès radio (3, 11, 16), lorsque l'unité d'accès radio (3, 11, 16) actuellement sélectionnée indique qu'elle ne dispose d'aucune liaison radio.

15. Dispositif selon la revendication 14, **caractérisé en ce que** le moyen de balayage est configuré pour que le balayage s'effectue au niveau d'une période prédéterminée.

16. Dispositif selon la revendication 15, **caractérisé en ce que** le moyen de balayage est configuré pour que le balayage s'effectue au niveau d'une seule trame temporelle dans chaque multitrame, laquelle trame temporelle est balayée une fréquence à la fois.

17. Dispositif selon la revendication 16, **caractérisé en ce que** le moyen de balayage est configuré pour que le balayage s'effectue au niveau de la trame temporelle DECT numéro 14, laquelle est balayée une fréquence à la fois.

18. Dispositif selon l'une quelconque des revendications 14 à 17, **caractérisé en ce que** le moyen de balayage est configuré de façon à ce que, dans le cas d'un appel en attente, le balayage s'effectue au niveau de plus d'une trame temporelle dans chaque multitrame.

19. Dispositif selon l'une quelconque des revendications 14 à 18, **caractérisé en ce que** l'unité de radiocommunications distante (2, 12, 17) est configurée pour mémoriser et organiser, dans une base de données, les informations concernant l'intensité du signal et l'état annoncé d'occupation pour la transmission de parole et pour la transmission de données par rapport à l'unité d'accès radio (3, 11, 16) qui est actuellement sélectionnée.

20. Dispositif selon la revendication 19, **caractérisé en ce que** les informations concernant la disponibilité d'une liaison radio avec les unités d'accès radio (3, 11, 16) sont mémorisées dans la base de données pendant une période de sauvegarde prédéterminée.

21. Dispositif selon l'une quelconque des revendications 14 à 20, **caractérisé en ce que** le moyen de sélection configuré pour la sélection de l'unité d'accès radio (3, 11, 16) est fonction de l'intensité du signal et d'indicateurs d'occupation pour la transmission de parole et/ou pour la transmission de données d'unités d'accès radio (3, 11, 16) qui ont été sélectionnées par l'unité de radiocommunications distante (2, 12, 17) durant une période de sauvegarde prédéterminée.

22. Dispositif selon l'une quelconque des revendications 14 à 21, **caractérisé en ce que** l'unité de radiocommunications distante (2, 12, 17) comprend :
- une unité centrale de commande (52) comprenant une mémoire (61) et, reliées à celle-ci, une unité de commande du cadencement et de la synchronisation (54) ; une unité d'entrée/sortie (57) ; un affichage (63) ; un clavier (62) et un générateur de sonnerie (64) ;
- l'unité de commande du cadencement et de la synchronisation (54) étant reliée à une unité radio (53) et à une unité de traitement de la parole (55),
- l'unité radio (53) étant reliée à une antenne (56),
- l'unité de traitement de la parole (55) étant reliée à un codec (58),
- le codec (58) étant relié à un microphone (60) et à un haut-parleur (59),
- le générateur de sonnerie (64) étant relié à un vibreur sonore (65) et à une LED (66), et
- une source d'alimentation (67).

23. Dispositif selon l'une quelconque des revendications 14 à 22, **caractérisé en ce que** l'unité d'accès radio (3, 11, 16) comprend :
- une unité de synchronisation de trames et de créneaux (71), reliée à une unité émettrice et modulatrice (75) ; une unité d'insertion de champs de synchronisation et de commande (77), un multiplexeur (70) ; une unité d'extraction de champs de synchronisation et de commande (76), une unité réceptrice et démodulatrice (74),
- une unité de commande et d'application (69) reliée à l'unité d'insertion de champs de synchronisation et de commande (77) et au multiplexeur (70), et à des commutateurs de commande (72) et (73),
- un commutateur d'émission/réception (72) relié à l'unité réceptrice et démodulatrice (74), à l'unité émettrice et modulatrice (75) et au commutateur à diversité d'antenne (73),
- le commutateur à diversité d'antenne (73) étant relié aux antennes, et
- un multiplexeur (70), relié à l'interface du central radio (RE).
